# EUROPEAN PATENT APPLICATION

(11) **EP 4 513 954 A1**
(43) Date of publication of application: **26.02.2025**
(21) Application number: 23791310.8
(22) Date of filing: 20.04.2023
(51) Int. Cl.: H04W 28/06

(54) **ELECTRONIC DEVICE AND METHOD IN WIRELESS COMMUNICATION SYSTEM**

(30) Priority: 21.04.2022 CN 202210423618
(71) Applicant: Sony Group Corporation, Tokyo 108-0075 (JP)
(72) Inventor: FAN, Tingting, Beijing 100027 (CN)
(74) Representative: D Young & Co LLP
(86) International application number: PCT/CN2023/089439
(87) International publication number: WO 2023/202657

(57) **Abstract**

The present disclosure relates to an electronic device and a method in a wireless communication system. Provided is a control-side electronic device in a wireless communication system. The control-side electronic device can perform multi-stream data transmission with a terminal-side electronic device of the wireless communication system, the control-side electronic device comprises a processing circuit, and the processing circuit is configured to: configure at least two pieces of scheduling identification information on the basis of data transmission characteristics of data streams which are included in the multi-stream data transmission; associate the at least two pieces of scheduling identification information with the data streams which are included in the multi-stream data transmission; and for a particular data stream in the multi-stream data transmission, combine scheduling identification information associated with the particular data stream with control information for scheduling the particular data stream, so as to transmit the particular data stream.

## Description

### CROSS-REFERENCE OF RELATED APPLICATIONS

The present application claims the priority of Chinese patent application No. 202210423618.3 filed on April 21, 2022, which is incorporated by reference herein in its entity.

### FIELD OF THE INVENTION

The present disclosure relates to wireless communication, and in particular, to data transmission in a wireless communication system.

### BACKGROUND

With development and widespread application of mobile Internet technology, more and more devices are connected into mobile networks, and new services and applications are emerging in endlessly. In order to meet people's communication requirements, the fifth-generation mobile communication technology (referred to as 5G or 5G technology) has become a hot spot of discussion and research in the communication industry and academia. The fifth-generation mobile communication technology is a new generation of cellular mobile communication technology, and its performance goals comprise high data rate, latency reduction, energy saving, cost reduction, system capacity improvement and large-scale device connectivity.

With rapid development of the number of Internet users and communication requirements, a variety of mobile data traffics will bring serious challenges to the network. In particular, the growth of data traffic is often accompanied by complex data transmission operations and enhancement in power consumption overhead, which imposes higher requirements on the current wireless communication.

### DISCLOSURE OF THE INVENTION

The present disclosure provides a scheme for optimizing data transmission, particularly multi-stream data transmission, in a wireless communication system.

In one aspect, the present disclosure relates to a control-side electronic device in a wireless communication system, wherein the control-side electronic device can perform multi-stream data transmission with a terminal-side electronic device in the wireless communication system, and the control-side electronic device comprises a processing circuit which is configured to determine an amount of scheduling identification information configured for the terminal-side electronic device, based on data transmission characteristics of data streams included in the multi-stream data transmission; in response to it is determined to configure multiple pieces of scheduling identification information, associate the multiple pieces of scheduling identification information with multiple data streams included in the multi-stream data transmission; and for a specific data stream in the multi-stream data transmission, combine scheduling identification information associated with the specific data stream and control information for scheduling the specific data stream for transmission of the specific data stream.

In another aspect, the present disclosure relates to a terminal-side electronic device in a wireless communication system, wherein the terminal-side electronic device can perform multi-stream data transmission with a control-side electronic device in the wireless communication system, and the terminal-side electronic device comprises a processing circuit which is configured to acquire combination information of specific scheduling identification information and specific control information, wherein the specific scheduling identification information is selected from multiple pieces of scheduling identification information associated with data streams in the multi-stream data transmission that configured based on data transmission characteristics of the data streams; determine a specific data stream associated with the specific scheduling identification information based on the specific scheduling identification information, and perform data transmission of the specific data stream based on the specific control information.

In still another aspect, the present disclosure relates to a method for a control-side electronic device in a wireless communication system, wherein the control-side electronic device can perform multi-stream data transmission with a terminal-side electronic device in the wireless communication system, and the method comprises determining an amount of scheduling identification information configured for the terminal-side electronic device, based on data transmission characteristics of data streams included in the multi-stream data transmission; in response to it is determined to configure multiple pieces of scheduling identification information, associating the multiple pieces of scheduling identification information with multiple data streams included in the multi-stream data transmission; and for a specific data stream in the multi-stream data transmission, combining scheduling identification information associated with the specific data stream and control information for scheduling the specific data stream for transmission of the specific data stream.

In yet another aspect, the present disclosure relates to a method for a terminal-side electronic device in a wireless communication system, wherein the terminal-side electronic device performs multi-stream data transmission with a control-side electronic device in the wireless communication system, and the method comprises acquiring combination information of specific scheduling identification information and specific control information, wherein the specific scheduling identification information is selected from multiple pieces of scheduling identification information associated with data streams in the multi-stream data transmission that configured based on data transmission characteristics of the data streams; determining a specific data stream associated with the specific scheduling identification information based on the specific scheduling identification information, and performing data transmission of the specific data stream based on the specific control information.

In yet another aspect, the present disclosure relates to a non-transitory computer-readable storage medium storing executable instructions thereon, and the executable instructions, when executed by a processor, cause the processor to implement methods as described herein.

In yet another aspect, the present disclosure relates to a wireless communication device, the wireless communication device includes a processor and a storage device having stored executable instructions thereon, and the executable instructions, when executed by a processor, cause the processor to implement methods as described herein.

In yet another aspect, the present disclosure relates to a wireless communication apparatus including means for implementing methods as described herein.

In yet another aspect, the present disclosure relates to a computer program product comprising instructions executable by an electronic device to implement the method as described herein.

In yet another aspect, the present disclosure relates to a computer program comprising instructions which, when executed by a computer, cause the computer to implement methods as described herein.

The above summary is provided in order to summarize some exemplary embodiments and provide a basic understanding of various aspects of the subject matter described herein. Accordingly, the above features are exemplary only and should not be construed as in any way narrowing the scope or spirit of the subject matter described herein. Other features, aspects, and advantages of the subject matter described herein will become apparent from the following detailed description, taken in conjunction with the accompanying drawings.

### DESCRIPTION OF THE DRAWINGS

Hereinafter, the above and other objects and advantages of the present disclosure will be further described in combination with specific embodiments with reference to the accompanying drawings. In the drawings, the same or corresponding technical features or components will be denoted by the same or corresponding reference numerals.
FIGs. 1A and 1B show a conceptual signaling interaction diagram and a timing diagram for data transmission in a wireless communication system.
FIGs. 2A and 2B show a signaling interaction diagram and a timing diagram for multi-stream data transmission according to an embodiment of the present disclosure.
FIG.3 shows a block diagram of a control-side electronic device in a wireless communication system according to an embodiment of the present disclosure.
FIG.4 shows a DCI format according to an embodiment of the present disclosure.
FIGs. 5A and 5B show examples of ***PhysicalCellGroupConfig*** information according to an embodiment of the present disclosure.
FIGs. 6A and 6B respectively show signaling interaction diagrams of uplink data transmission and downlink data transmission in multi-stream data transmission according to an embodiment of the present disclosure.
FIGs. 7A to 7C illustrate scheduling/configuration updates of I-stream and/or P-stream according to an embodiment of the present disclosure.
FIG. 8 shows a flowchart of a method for a control side in a wireless communication system according to an embodiment of the present disclosure.
FIG. 9 shows a block diagram of a terminal-side electronic device in a wireless communication system according to an embodiment of the present disclosure.
FIG. 10 shows a flowchart of a method for a terminal side in a wireless communication system according to an embodiment of the present disclosure.
FIG. 11 schematically illustrates a block diagram of an exemplary structure of a personal computer as an information processing device that can be employed in an embodiment of the present disclosure.
FIG. 12 is a block diagram illustrating a first example of a schematic configuration of an eNB to which the technology of the present disclosure can be applied.
FIG. 13 is a block diagram illustrating a second example of a schematic configuration of an eNB to which the technology of the present disclosure can be applied.
FIG. 14 is a block diagram illustrating an example of a schematic configuration of a smartphone to which the technology of the present disclosure can be applied; and
FIG. 15 is a block diagram illustrating an example of a schematic configuration of a vehicle navigation device to which the technology of the present disclosure can be applied.

Although embodiments of this disclosure may be susceptible to various modifications and alternative forms, the embodiments of the present disclosure are shown by way of example in the drawings and are described in detail herein. It should be understood that the drawings and detailed description thereof are not intended to limit the embodiments to the particular forms disclosed, on the contrary, the intention is to cover all modifications, equivalents, and alternatives falling within the spirit and scope of the claims.

### DETAILED DESCRIPTION OF PREFERRED EMBODIMENTS

Hereinafter, exemplary embodiments of the present disclosure will be described with reference to the accompanying drawings. For the sake of clarity and conciseness, not all features of the embodiments are described in the description. However, it should be understood that many implementation-specific settings must be made during the implementation of the embodiments in order to achieve specific goals of developers, for example, to meet those constraints related to equipment and business, and these constraints may vary with different implementations. In addition, it should be understood that although the development work may be very complicated and timeconsuming, it is only a routine task for those skilled in the art who benefit from this disclosure.

Here, it should also be noted that in order to avoid obscuring the present disclosure by unnecessary details, only processing steps and/or device structures closely related to the schemes at least according to the present disclosure are shown in the drawings, while other details not closely related to the present disclosure are omitted. It should be noted that similar reference numerals and letters indicate similar items in the drawings, and therefore, once an item is defined in one drawing, there is no need to discuss it for subsequent drawings.

In this disclosure, the terms "first", "second" and the like are only used to distinguish elements or steps, and are not intended to indicate time sequence, preference, or importance.

Currently, 5G communication has been widely used in various applications, especially Extended Reality (XR) applications. XR refers to a real-and-virtual combined and human-machine interactive environment which can be generated through computer technology and wearable devices, including a variety of forms such as augmented reality (AR), virtual reality (VR), mixed reality (MR) and so on. The development of XR must rely on large bandwidth and low latency, so 5G will naturally support XR.

With increasing demand for XR services, in order to enable New Radio (NR) to efficiently support XR/CG (computer graphics) traffics in 5G communication, the study items (SI) of 3GPP in Rel-17 and Rel-18 have begun to study how the Radio Access Network (RAN) can better support XR traffics. Through research, it can be understood that a XR traffic may have the following characteristics: multiple data streams containing different Quality of Service (QoS) requirements, large data volume, fixed/non-fixed packet size, and low traffic latency requirement.

TR38.838 of 3GPP specifies data streams and traffic model for each data stream in VR (Virtual Reality), CG (Cloud Gaming), AR (Augmented Reality), etc.. Taking AR scenario as an example, the downlink in the AR scenario can contain at most two streams of data, one is I-stream, and the other is P-stream. The traffic models for I-stream and P-stream are shown in Table 5 and Table 10 of TR38.838. Tables 1 and 2 are shown below respectively, where Table 1 illustrates statistical parameters for Option 1 multi-stream downlink traffic model and Table 2 illustrates statistical parameters for multi-stream downlink VR traffic model.

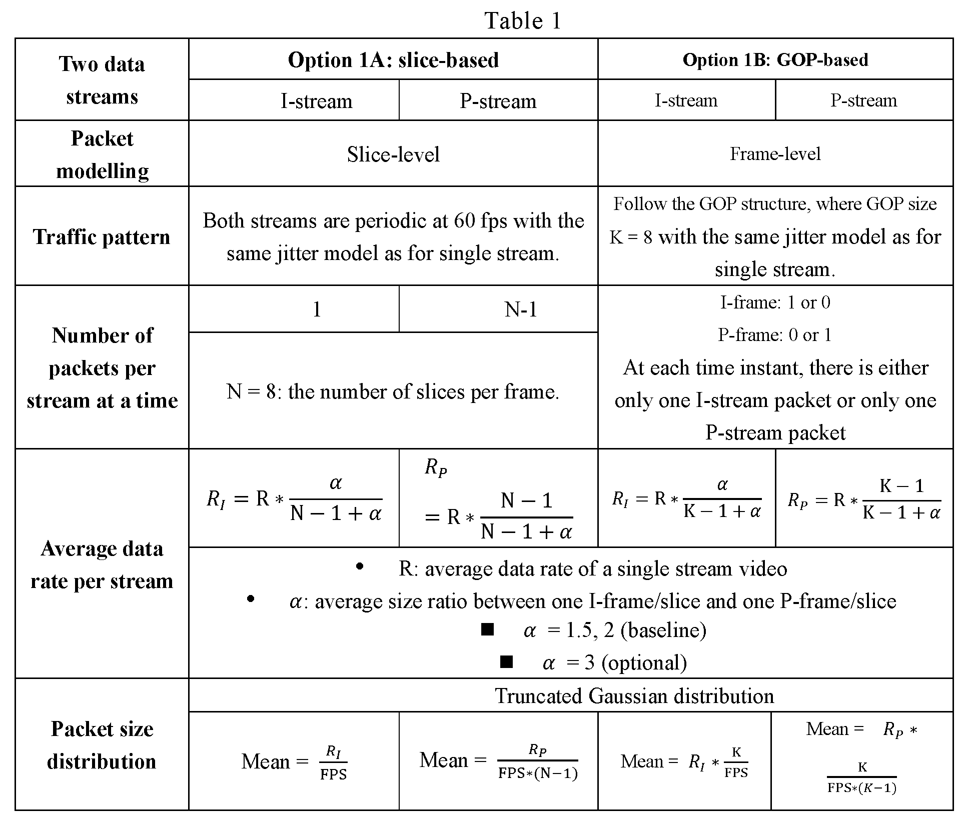

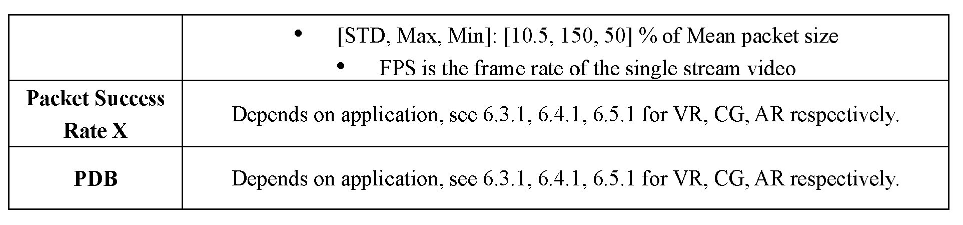

**Table 2**

| Parameters | unit | Baseline values for evaluation | Optional values for evaluation |
|---|---|---|---|
| Packet Success rate X for I stream | % | 99 | Other values can be optionally evaluated. |
| Packet Success rate X for P stream | % | 99 | Other values can be optionally evaluated. |
| PDB for I stream | ms | 10 | Other values can be optionally evaluated. |
| PDB for P stream | ms | 10 | Other values can be optionally evaluated. |

There are four models for uplink in AR scenario, which are: Model 1: singlestream model; Model 2: two-stream model; Model 3A: three-stream model A; Model 3B: third-rate model B. As an example, model 3B contains three data streams, in which the first stream is periodic, and the traffic model is as shown in Table 7 of TR38.838. The other two streams are consistent with the Downlink (DL) data stream, that is, one stream is an I-stream, and one stream is a P-stream, and the traffic models for the I-stream and the P-stream are as shown in Table 5 and Table 17 of TR38.838, respectively. Table 3 and Table 4 are shown below respectively, where Table 3 shows statistical parameters for uplink pose/control traffic, and Table 4 shows statistical parameters for streams 2 and 3 of AR uplink model 3B (three-stream data model).

**Table 3**

| Parameters | unit | Baseline values for evaluation | Optional value for evaluation |
|---|---|---|---|
| Periodicity | ms | 4 | Other values can be optionally evaluated. |
| Jitter | ms | No jitter | |
| Packet size | byte | 100 | |
| PDB | ms | 10 | |
| Packet Success Rate X | % | 99 | 90, 95 |

**Table 4**

| Parameters | unit | Baseline values for evaluation | Optional values for evaluation |
|---|---|---|---|
| Packet Success rate X for I stream | % | 99 | Other values can be optionally evaluated. |
| Packet Success rate X for P stream | % | 99 | Other values can be optionally evaluated. |
| PDB for I stream | ms | 30 | Other values can be optionally evaluated. |
| PDB for P stream | ms | 30 | Other values can be optionally evaluated. |

It can be seen that XR traffics may generally contain multiple data streams containing different Quality of Service (QoS) requirements, large data volume, and require high reliability and low latency. In addition, some data streams in XR traffics, such as I/P stream, audio/data stream, etc., may be periodic, while some data streams, such as I/P stream and video data stream, further have the characteristic that the arrival packets have non-fixed sizes. As an example, in VR downlink multi-stream data communication, multi streams may include two streams, one of which is an audio/data stream that is periodic and has fixed size, and the other is a video stream that is characterized with non-fixed packet size. In this way, data characteristics of XR traffic need to be considered when data communication transmission is carried out for XR traffics in 5G system.

In 5G(NR) networks, a specific scheduling manner may be generally introduced to handle data transmission, in particular, it generally employs configure grant (CG)/ semi-persistent scheduling (SPS) to schedule periodic arrival traffics. As an example, the existing standards respectively adopt CG-PUSCH and SPS-PDSCH technologies for arrival of uplink and downlink periodic traffics. In operation, a Configured Scheduling-Radio Network Temporary Identifier (CS-RNTI) allocated for a terminal in the network can be used for Semi-persistent scheduling (SPS)/ configure grant (CG) scheduling, and can be transmitted to a terminal UE through Radio Resource Control (RRC) signaling, and the UE determines activation/deactivation/adjustment of SPS/CG from the result of descrambling the physical downlink control channel (PDCCH) based on CS-RNTI, so as to carry out data transmission accordingly.

In current communication, a base station usually configures a single CS-RNTI for data transmission scheduling. However, when there exists multiple Transmission Blocks (TB) or non-fixed-size packets in data transmission, if a single CS-RNTI is still used to schedule Downlink Control Information (DCI) of multiple TBs, many problems will arise. On one hand, the format of DCI needs to be modified to support SPS/CG configuration indication of multiple TBs. On the other hand, in a case of multi-stream data transmission, because adjustment times of SPS/CG of different streams may not be aligned, using one DCI to indicate SPS/CG of different streams at the same time must be inaccurate to some extent. In addition, when scheduling DCI of multiple TBs only indicates one SPS/CG, that is, when only one TB is valid, the other TB needs to be set to a special value, which will cause waste of DCI data transmission; if when only one TB is transmitted, a DCI that can only schedule one TB is switched to, then the DCI needs to contain an extra bit to indicate which of the multiple streams it belongs to. In this way, the technology of configuring a single CS-RNTI to schedule multiple TBs requires great changes to the standard, resulting in high operational complexity.

In view of this, the present disclosure proposes optimized multi-stream data transmission for wireless communication. In particular, the present disclosure proposes an improved multi-stream data transmission scheduling scheme, where for multi-stream data transmission especially suitable for XR service, scheduling identification information for data transmission scheduling can be set correspondingly for multiple (pairs of) uplink and/or downlink data streams in XR service, thereby enabling enhancement for transmission of multiple (pairs of) uplink and/or downlink data streams. In particular, corresponding scheduling identification information can be set for multiple (pairs of) uplink and/or downlink data streams in XR service, especially for scheduling configuration of data streams, such as semi-persistent scheduling or configure grant (SPS/CG), corresponding scheduling identification information can be set, so that enhancement for transmission of multiple (pairs of) uplink and downlink data streams, especially SPS/CG transmission enhancement for multi-stream data transmission, can be realized.

Implementation of wireless communication between a control-side device and a terminal-side device in a wireless communication system according to an embodiment of the present disclosure will be described in detail below. The following description uses CS-RNTI as an example of scheduling identification information, but it should be pointed out that the scheduling identification information can be indicated by other appropriate information, as long as it can distinguish/indicate relevant configuration of data transmission scheduling.

Embodiments of the present disclosure particularly relate to data communication between a control-side device and a terminal-side device including multi-stream data transmission. Depending on the direction of signal flow, the control-side device can be the transmitter of downlink multi-stream data transmission, and the terminal-side device can be the receiver of downlink multi-stream data transmission. The control-side device performs downlink communication to the terminal-side device, and the terminal-side device performs uplink communication to the control-side device. Here, as an example, the control-side device may be gNB, and/or the terminal-side device may be user equipment (UE). It should be noted that downlink and uplink communication can be determined depending on the direction of signal flow. For example, in another example, when the communication from the user equipment (UE) to the gNB is downlink communication, the control-side device may be the user equipment (UE) and the terminal-side device may be the gNB.

The data communication between the control-side device and the terminal-side device can be carried out in various appropriate modes. Particularly, DRX (Discontinuous Reception) mode can be adopted. Specifically, in DRX communication, the data stream based on data packets is usually sudden, when there is no data transmission, the power consumption can be reduced by turning off the reception circuit of terminal-side device, such as UE, so as to improve the battery life. The basic mechanism of DRX communication is a DRX cycle set by UE in RRC_CONNECTED state, which consists of "ON duration" and "opportunity for DRX", in the ON duration, UE monitors and receives downlink control information transmission, such as PDCCH, thereby performs data transmission; in the opportunity for DRX, UE may not receive data in the downlink channel for saving power consumption. In this way, in time domain, time can be divided into successive DRX cycles for communication.

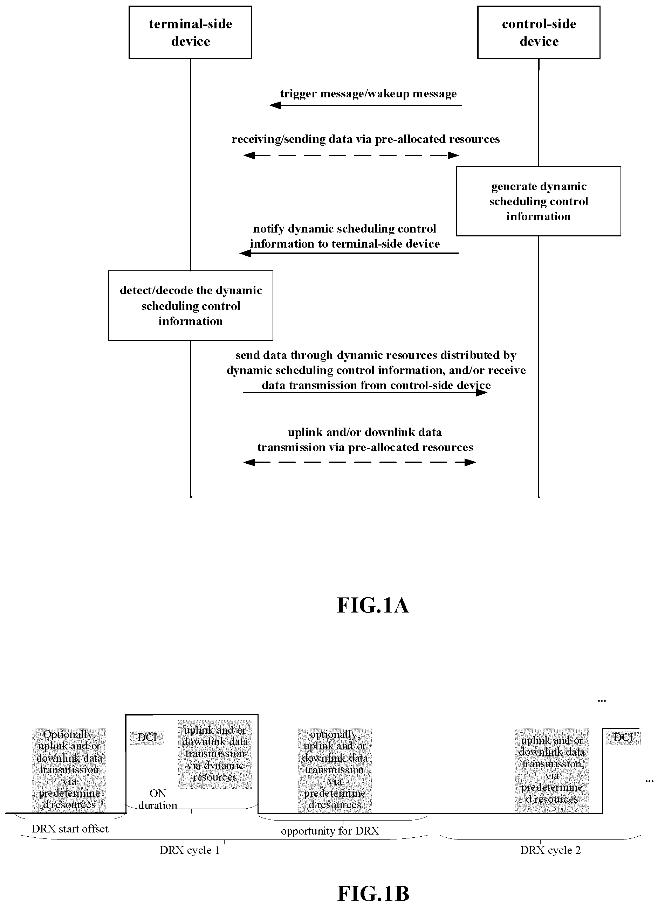

FIGs. 1A and 1B show conceptual signaling interaction diagram and timing diagram in DRX implementation for data transmission in a wireless system.

At the beginning of communication, the control-side device sends trigger information/WakeUp signal (WUS) to the terminal-side device to start data communication between the control-side device and the terminal-side device. The trigger information/ WakeUp signal can be in various appropriate forms and sent in various appropriate ways, for example, via the PDCCH, which will not be described in detail here.

The terminal-side device monitors the information and starts communication between the terminal-side device and the control-side device, including at least one of uplink communication and downlink communication. At least one of uplink and downlink communication can use pre-allocated resources for data transmission. The pre-allocated resources may correspond to a specific data transmission mode, such as periodic data transmission, etc. As an example, the terminal-side device uses CG-PUSCH for uplink data transmission, and/or the control-side device uses SPS-PDSCH for downlink data transmission, wherein the data carried on CG-PUSCH and SPS-PUSCH can be appropriately set, which will not be described in detail here. It should be pointed out that the communication at this time is carried out during DRX offset, but it is optional, not necessary, for example, data transmission may not be carried out when there are no pre-allocated resources.

The control-side device will acquire information of data to be dynamically scheduled, and based on the information, can generate control information, such as DCI, in which the resources allocated for the data transmission can be indicated, and then send the control information to the terminal-side device for decoding. Among them, the control information may include uplink control information UL DCI and/or downlink control information DL DCI. Therefore, the terminal-side device can receive and decode DCI, and then perform data transmission on specified resources according to DCI. In particular, UL DCI can be decoded, and then data can be transmitted on the specified time-frequency resources according to the UL DCI. In addition, DL DCI can be decoded, and data can be received on the specified time-frequency resources according to the DL DCI. The above operations can be performed during the ON duration of DRX.

Then "opportunity for DRX" of DRX is entered. However, uplink communication and/or downlink communication can still be performed according to pre-allocated resources during "opportunity for DRX" of DRX. For example, according to the parameter configuration of CG-PUSCH/SPS-PDSCH, there may still be at least one CG-PUSCH/SPS-PDSCH for data transmission during the "opportunity for DRX" of DRX. It should be pointed out that the data transmission during the "opportunity for DRX" of DRX is only optional and not necessary.

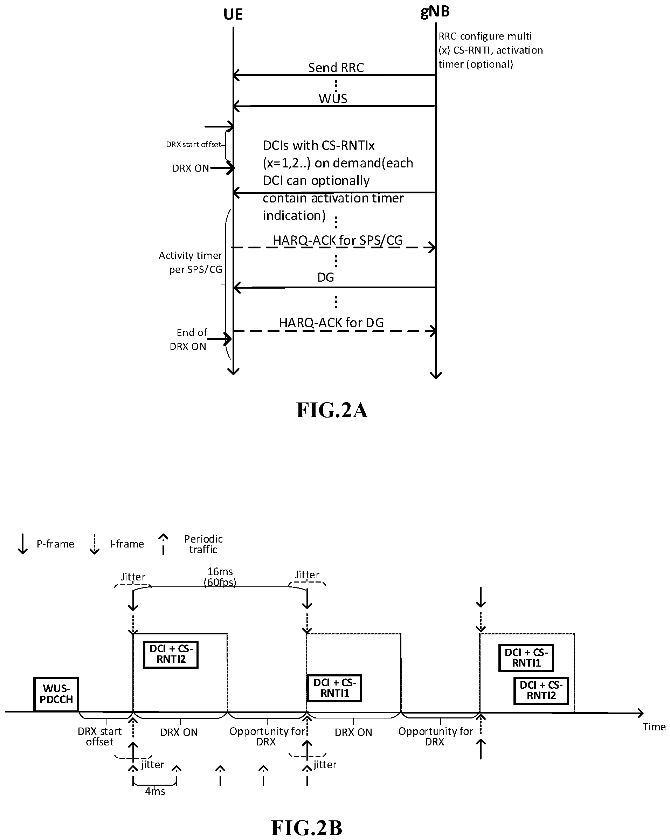

Fig. 2A shows a conceptual signaling diagram of a multi-stream data transmission process in wireless communication according to an embodiment of the present disclosure. The data communication between the control-side device and the terminal-side device, especially the multi-stream data communication, can be carried out in various appropriate modes, such as the DRX mode as mentioned above. Multi-stream data communication may mean that the data communication between the control-side device and the terminal-side device may include at least two different types of data streams, such as I stream, P stream, B stream in AR service, video stream and audio/data stream in VR service, or other types of data streams, in particular, multi-stream data communication may correspond to at least one of uplink data communication and downlink data communication.

First, the control-side device can generate configuration information related to data communication between the control-side device and the terminal-side device, which can be Radio Resource Configuration (RRC) information and can be indicated by ***RRCconfiguration*** field in communication signaling, the radio resource configuration information can include one or more CS-RNTI, which are configured respectively with respect to each data stream, even scheduling configuration (e.g., SPS/CG) in each data stream, in data communication. In addition, additionally, the control-side device can also be configured with an activation timer, for example, corresponding activation timers can be configured for each data stream, especially SPS/CG in each data stream. At the beginning of communication, the trigger information/WakeUp Signal (WUS) can be transmitted between the terminal-side device and the control-side device to activate/start the data communication between the control-side device and the terminal-side device. In particular, the trigger information/ WakeUp Signal can be used to activate Discontinuous Reception (DRX) between the control-side device and the receiving-side device, so that the control-side device sends RRC configuration and optional timer configuration to the terminal-side device when the connection state is established. It should be noted that RRC configuration and timer configuration can be set by other devices and notified to the control-side device and the terminal-side device.

Then, during the ON duration of Discontinuous Reception (DRX) between the control-side device and the receiving-side device, DCI transmission, including transmission and reception, can be performed. Specifically, CS-RNTI can be transmitted to the terminal-side device by scrambling DCI, and activation timer indication information set by the control-side device can also be included in DCI and transmitted to the terminal-side device. The terminal-side device can receive DCI, including DCI scrambled by CS-RNTI. Then, when the DCI is activated according to the optional activation timer indication information included in the DCI, operations, such as uplink and/or downlink data transmission, can be respectively performed for SPS/CG of the data stream and optionally, feedback such as Hybrid Automatic Repeat request (HARQ)-acknowledgement information (ACK) can be provided. It should be pointed out that such feedback is not necessary.

Additionally, or alternatively, the control-side device can also perform Dynamic Scheduling (DG) according to a communication condition during communication, and at this time, CS-RNTI can be similarly generated and set for adjusting the multi-stream data transmission, where the CS-RNTI can also scramble the DCI and transmit to the terminal-side device, as described above. And, optionally, the terminal-side device can perform operations and feedback HARQ-ACK to the control-side device, and it should be pointed out that such feedback is not necessary either, as indicated by the dotted line in the figure. The operations in the dynamic scheduling described above can also be performed during DRX ON.

Fig. 2B shows a timing diagram of multi-stream data transmission according to an embodiment of the present disclosure. In the DRX activation (ON) period, DCI is combined with CS-RNTI, for example, CS-RNTI scrambles DCI, and different CS-RNTI numbers (for example, CS-RNTI1, CS-RNTI2, ...) correspond to different data streams, which will be described in detail below.

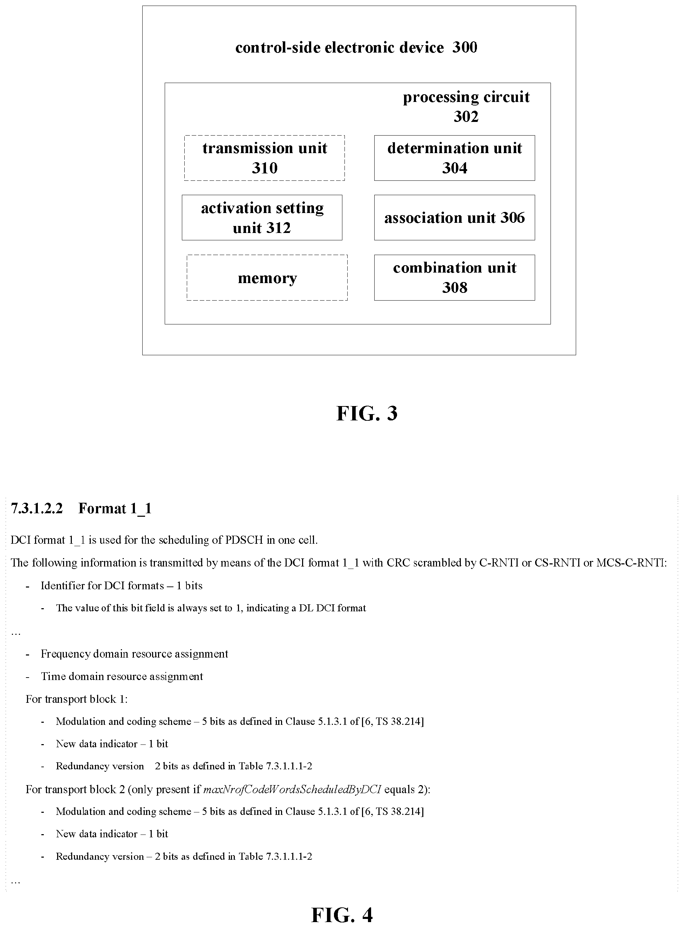

An exemplary electronic device in a wireless communication system according to an embodiment of the present disclosure will be described below. FIG. 3 shows a control-side electronic device 300 of a wireless communication system according to an embodiment of the present disclosure, which can perform multi-stream data transmission with a terminal-side electronic device in the wireless communication system. The control-side electronic device 300 includes a processing circuit 302 that is configured to determine an amount of scheduling identification information configured for the terminal-side electronic device, based on data transmission characteristics of data streams included in the multi-stream data transmission; in response to it is determined to configure multiple pieces of scheduling identification information, associate the multiple pieces of scheduling identification information, for example, at least two pieces of scheduling identification information, with multiple data streams included in the multi-stream data transmission; and for a specific data stream in the multi-stream data transmission, combine scheduling identification information associated with the specific data stream and control information for scheduling the specific data stream for transmission of the specific data stream.

The implementation of each operation performed by the processing circuit will be described in detail below. In the following, description may be made by taking the scheduling identification information being CS-RNTI and the control information being DCI as an example, but the scheduling identification information and the control information are not so limited, but can also be other appropriate information.

According to an embodiment of the present disclosure, multi-stream data transmission may include uplink data transmission and downlink data transmission, and the uplink data transmission and downlink data transmission are usually paired, while at least one of the uplink data transmission and downlink data transmission may include at least two different types of data streams, for example, depending on whether the data streams are periodic, whether the packet sizes of the data streams are fixed, and so on, such as I stream, P stream, B stream, or other types of data streams. In particular, the number of data streams included in the uplink data transmission and the downlink data transmission may be the same or different, and the types of data streams included in the uplink data transmission and downlink data transmission may be the same or different. As an example, each of the uplink data stream and the downlink data stream may include an I stream and a P stream, and both the I stream and the P stream are streams that are periodic and/or have non-fixed packet sizes. As another example, the downlink data streams may include multiple streams in the aforementioned VR downlink communication, which include an audio/data stream that is periodic and has fixed packet size and a video stream that has non-fixed packet size. The following description is mainly based on I-stream and P-stream. It should be pointed out that the concept of the present disclosure is also applicable to various data streams in other types of multi-stream transmission, and will not be described in detail here.

According to the embodiment of the present disclosure, data transmission characteristics of multi-stream data transmission for configuring the scheduling identification information may relate to/correspond to the types of data streams, especially including at least data periodicity and data size characteristics. As an example, the transmission characteristics may include whether the data stream transmission is periodic, the periodicity of the data stream transmission, whether the transmitted data stream contains packets of non-fixed sizes, the packet sizes, and so on. **In** particular, the data periodicity can include that the data transmission has completely equal periodic, and it can also include quasi-periodic which is close to the completely equal periodic, for example, the periods are 33.33, 33.33, 33.34, 33.33, 33.33, 33.34 .... It can also include a case that the periods corresponding to XR 30fps are 33ms, 33ms, 34ms, 33ms, 33ms, 34ms..., and a case that the periods corresponding to XR 60fps is 16 ms, 16 ms, 17 ms, 16 ms, 17 ms ... and so on. It should be pointed out that this characteristic including quasi-periodicity can also be called quasi-periodicity, so in the context of the present disclosure, the periodicity/quasi-periodicity of data can be regarded as being equivalent to the data periodicity.

According to an embodiment of the present disclosure, the data transmission characteristics of multi-stream data transmission can be acquired by the control-side electronic device in various appropriate ways. In some embodiments, the data transmission characteristics can be reported by the terminal-side electronic device to the control-side electronic device.

In some embodiments, the data transmission characteristics can be included in various appropriate information representations, particularly preferably in UE assistance information (UAI). As an example, the terminal-side device reports assistance information to the control-side device, so that the control-side device can know the situation of each terminal-side device and configure/schedule the terminal-side device. For example, the UE may send UE assistance information (UAI) to the base station, where UAI may include various appropriate information, including, but not limited to, data transmission characteristics of uplink and downlink data streams, such as the number or stream ID of uplink and downlink streams, characteristics of each data stream such as periodicity (frame rate fps), packet distribution characteristics or scenario information (AR,VR,XR,CG etc), prediction or priori information about traffic packet size, prediction or priori information about traffic arrival jitter, packet dropping information, UE preference, etc. As another example, the information about data transmission characteristics may also include XR cognitive information in wireless access networks of other layers (for example, from R18 SID RP-213587, XR traffic characteristics (including both uplink and downlink), quality of service (Qos), application layer attributes, and so on). Therefore, based on the assistance information reported by the terminal-side device, a corresponding CS-RNTI can be set for each stream of data transmission, so that the multi-stream data transmission between the control-side device and the terminal-side device can be appropriately carried out to meet the multi-stream data transmission requirement.

According to an embodiment of the present disclosure, data streams included in the multi-stream data transmission may include data streams in at least one of the uplink data transmission and the downlink data transmission, so that scheduling identification information can be configured based on the data transmission characteristics of the data streams. In this way, corresponding scheduling identification information can be configured for at least one of uplink data transmission and downlink data transmission respectively. In particular, configuration can be made for at least one of different data streams included in at least one of uplink data transmission and downlink data transmission in the multi-stream data transmission. In some embodiments, the data streams may contain I stream and/or P stream, so that the corresponding scheduling identification information can be configured for at least one of I stream and P stream respectively.

In some examples, corresponding scheduling identification information can be set for one of the uplink data transmission and the downlink data transmission, especially the data stream therein, such as I stream, or P stream, or both I stream and P stream. In this way, respectively with respect to the data stream in the uplink data transmission or the data stream in the downlink data transmission, corresponding scheduling identification information can be set according to data transmission characteristics of the data stream. In other examples, corresponding scheduling identification information can be set for both uplink and downlink data streams in pairs, for example, paired I streams, or P streams, or both I stream and P stream. In this way, with respect to both the data stream in the uplink data transmission or the data stream in the downlink data transmission, scheduling identification information can be set according to the data transmission characteristics of both data streams. Generally, in such a case, the scheduling identification information is common to paired uplink and downlink data streams, such as paired I streams, paired P streams, etc. It should be pointed out that depending on the service type, the data streams may further include other types of streams, such as the aforementioned video stream and audio/data stream in VR downlink traffic, and for such other types of streams, the scheduling identification information may be configured in a similar manner.

According to an embodiment of the present disclosure, the amount of scheduling identification information can be set appropriately. In some embodiments, when scheduling identification information is configured for one of uplink data transmission and downlink data transmission in multi-stream data transmission, the amount of scheduling identification information can be set based on the number of specific types of data streams contained in one of uplink data transmission and downlink data transmission, such as I streams, P streams, B streams or other types of data streams, especially based on the number of data streams with the data transmission characteristics contained therein. For example, when it is configured for one of uplink data transmission and downlink data transmission, considering the periodicity of data transmission, the amount of scheduling identification information may be the number of periodic data streams in one of uplink data transmission and downlink data transmission; when considering non-fixed packet size, the amount of scheduling identification information may be the number of data streams of non-fixed sizes in one of uplink data transmission and downlink data transmission.

In some embodiments, when scheduling identification information is configured for both of uplink data transmission and downlink data transmission in multi-stream data transmission, the amount of scheduling identification information can be set based on combination of the number of various data streams in uplink data transmission and the number of various data streams in downlink data transmission, especially the number of corresponding data streams with the data transmission characteristics, such as I streams, P streams, B streams, or other types of data streams included in both of uplink data transmission and downlink data transmission, and the acquired scheduling identification information can be commonly applied to the uplink transmitted data and the down transmitted data.

In some embodiments, the amount of scheduling identification information can be appropriately set based on the number of periodic/quasi-periodic data streams included in the multi-stream data transmission. In particular, the amount of the scheduling identification information can be determined based on combination of the number of periodic/quasi-periodic data streams contained in the uplink data stream and the number of periodic/quasi-periodic data streams contained in the downlink data stream, preferably corresponding to the maximum value therebetween.

According to an embodiment of the present disclosure, the number of CS-RNTIs set by the base station for the UE may be determined by a maximum number of periodic/quasi-periodic data streams in the uplink and downlink communication of the UE. In one example, in an AR scenario, such as the above AR scenario of Model 1 or 2, there are two periodic data streams (I stream and P stream) in the downlink and one (I stream or P stream) or two periodic data streams (both I and P streams) in the uplink. In such a case, the number of configured CS-RNTIs = MAX {number of downlink periodic/quasi-periodic data streams (2), number of uplink periodic/quasi-periodic data streams (1 or 2)} =2. Then the base station can configure two CS-RNTIs (CS-RNTI1 and CS-RNTI2) for the UE to serve a pair of uplink and downlink data streams (uplink and downlink I streams or uplink and downlink P streams) and another downlink data stream (P stream or I stream), or two pairs of uplink and downlink data streams (uplink and downlink I streams and uplink and downlink P streams) respectively. In another example, in an AR scenario, such as the above AR scenario of model 3A or 3B, there are two periodic data streams (I stream and P stream) in the downlink and three periodic data streams in the uplink. In such a case, the number of configured CS-RNTIs = MAX {number of downlink periodic/quasi-periodic data streams (2), number of uplink periodic/quasi-periodic data streams (3)} =3. Then the base station can configure three CS-RNTI (CS-RNTI1, CS-RNTI2 and CS-RNTI3) for the UE, of which two CS-RNTIs (such as CS-RNTI1 and CS-RNTI2) serve two pairs of uplink and downlink data streams (uplink and downlink I streams and uplink and downlink P streams) respectively, and another CS-RNTI serves the UL periodic traffic.

Alternatively, or additionally, in some embodiments, the amount of scheduling identification information may further set in consideration of the number of data streams of non-fixed packet sizes included in uplink communication and downlink communication. In particular, the amount of scheduling identification information can be determined based on combination of the number of data streams of non-fixed packet sizes included in uplink communication and downlink communication, preferably correspond to a maximum value therebetween. In still other embodiments, the amount of scheduling identification information may be set depending on the number of data streams included in uplink communication and downlink communication that have non-fixed packet sizes and are periodic/quasi-periodic, and the amount of scheduling identification information may correspond to the maximum value between the numbers of such data streams.

As an example, the number of CS-RNTIs set by the base station for the UE may be determined by the maximum number of data streams in the uplink and downlink for UE that have periodic/quasi-periodic and non-fixed packet sizes. For example, in a case of two downlink data streams and three uplink data streams in the above AR scenario, the two downlink data streams: I stream and P stream, are quasi-periodic and the packet sizes comply with a truncated Gaussian distribution, that is, data packets of non-fixed sizes, and among the three uplink data streams, two streams (I stream and P stream) are quasi-periodic and have non-fixed packet sizes, and the other stream is periodic and has fixed packet size. In such a case, the number of configured CS-RNTIs = MAX {number of periodic/quasi-periodic and non-fixed-size downlink data streams (2), number of periodic/quasi-periodic and non-fixed-size uplink data streams (2)} =2. Then the base station can configure two CS-RNTIs (CS-RNTI1 and CS-RNTI2) for the UE to serve two pairs of uplink and downlink data streams (uplink and downlink I streams, and uplink and downlink P streams) respectively. It should be pointed out that in this case, CS-RNTI is not assigned to a periodic and fixed-size uplink data stream, then the data stream can be processed and transmitted in other appropriate ways. In particular, the transmission configuration for the data stream can take effect directly via RRC configuration, without needing to use DCI for activation and deactivation, which will be described in detail below.

According to an embodiment of the present disclosure, when multiple pieces of scheduling identification information is determined, the determined multiple pieces of scheduling identification information can be associated with a plurality of data streams included in the multi-stream data transmission for data stream transmission. Especially, when the control-side electronic device configures multiple pieces of, for example at least two pieces of, scheduling identification information, especially CS-RNTI, for multi-stream data transmission between the control-side electronic device and the terminal-side electronic device, the configured CS-RNTIs should be associated with data streams in the multi-stream data transmission and possible scheduling of the data streams.

In some embodiments, the processing circuit is configured to associate multi-stream data in the multi-stream data transmission and predetermined amount of scheduling identification information (CS-RNTI) according to a parameter arrangement order, or associate multi-stream data in the multi-stream data transmission and predetermined amount of scheduling identification information (CS-RNTI) when the scheduling identification information is configured. Additionally, according to some embodiments of the present disclosure, the processing circuit can be further configured to associate scheduling identification information with scheduling configuration for data streams. In some embodiments, the scheduling configuration for data streams may include semi-persistent scheduling (SPS) and configure grant (CG), and the scheduling identification information for each data stream may be associated with SPS and/or CG of the data stream.

Specifically, when the base station configures multiple CS-RNTIs and/or there are multiple SPS/CG for multiple data streams, it is necessary to associate each CS-RNTI with each data stream or SPS/CG. In particular, each CS-RNTI can be associated with an identifier, such as an ID, of each data stream or SPS/CG. In an embodiment, the association can be performed in a default manner, for example, according to the arrangement order of parameters, especially CS-RNTIs. In particular, CS-RNTIs can be associated with data streams or SPS/CG in the same order or reverse order by default. For example, in the same order, the first ranked CS-RNTI is associated with the front ranked data stream or SPS/CG, or in the reverse order, for example, the front ranked CS-RNTIs can be associated with the behind ranked data stream or SPS/CG. As an example, when there are two CS-RNTIs, the association criterion may be the default association according to the arrangement order of the two parameters. For example, the front ranked CS-RNTI may be associated with stream ID1 or SPS/CG ID1, and the following CS-RNTI may be associated flow ID2 or SPS/CG ID2, and so on. In another embodiment, the association relationship between each CS-RNTI and each data stream or SPS/CG may be appropriately set, and in particular, (CS RNTI, stream ID or SPS/CG ID) pairs can be configured at configuration of CS-RNTI. As an example, (CS-RNTI, stream ID or SPS/CG ID) pairs can be configured when RRC configures CS-RNTI.

According to an embodiment of the present disclosure, the association of CS-RNTI with the stream ID or SPS/CG ID can be performed at any appropriate stage during wireless communication. In an embodiment, it can be implemented when DCI-related operation, such as activation, deactivation, parameter adjustment, etc. is performed, for example, the association can be performed by default when DCI activation or deactivation is performed, and the association can be performed by default or set when DCI parameter adjustment is performed. As another example, the association can be realized during activation between the terminal device and the control device, for example, the association relationship between CS-RNTI and stream ID or SPS/CG ID can be informed to UE in advance, or can be informed by the control-side device to the terminal-side device during communication.

According to an embodiment of the present disclosure, the processing circuit may be further configured to, for a specific data stream in the multi-stream data transmission, combine scheduling identification information associated with the specific data stream and control information for scheduling the specific data stream for transmission of the specific data stream. Specifically, the specific data stream may include a periodic/quasi-periodic data stream and/or a non-fixed-size data stream in the multi-stream data transmission, which may be included in uplink data transmission and/or downlink data transmission, as mentioned above, of course, the specific data stream may also be a data stream with other characteristics in the multi-stream data transmission, as long as the data stream need to/can be dynamically scheduled with resources for transmission.

In some embodiments, the scheduling configuration for a data stream may include at least one of semi-persistent scheduling (SPS) and configure grant (CG), and the control-side electronic device may apply, e.g., combine, the scheduling identification information for stream scheduling to the control information (DCI) corresponding to the scheduling configuration for the data stream, especially scrambling the DCI with CS-RNTI. As an example, the control information about SPS or CG for a data stream can be indicated by DCI, for example, DCI0 can correspond to CG and DCI1 can correspond to SPS. Of course, the indication relationship of DCI to SPS or CG for a data stream can also be other appropriate relationships, as long as different DCI information or indexes can be utilized to distinguish SPS from CG.

In particular, in some embodiments, a CS-RNTI can serve adjustment of SPS/CG configuration, activation and deactivation for an uplink data stream, or a downlink data stream, or a pair of uplink and downlink data stream. Specifically, if DCI 0_x is scrambled by CS-RNTI, the DCI indicates the adjustment of CG configuration, activation and deactivation; if DCI 1_x is scrambled by the CS-RNTI, the DCI indicates the adjustment of SPS configuration, activation and deactivation, without needing specific indication in DCI. On the other hand, when multiple CS-RNTIs are configured, multiple CS-RNTIs can be used for configuration, activation and deactivation of multiple pairs of SPS/CG at most.

FIG. 4 shows a DCI format according to an embodiment of the present disclosure, especially DCI Format 1-1. As can be seen from the figure, DCI will carry a time-frequency resource location where PDSCH is located, MCS, RV and other information, which indicates the location of PDSCH. When the DCI is scrambled by CS-RNTI, the time-frequency resource location, MCS, RV and other information are periodic resource locations for new SPS scheduling.

According to an embodiment of the present disclosure, the processing circuit may be configured to transmit the control information (DCI) and combined scheduling identification information through radio resource control signaling when data transmission is started. Alternatively, or additionally, according to an embodiment of the present disclosure, the processing circuit may be further configured to adjust the scheduling configuration for a data stream according to a data transmission condition, wherein the data transmission condition may include at least one of packet size, jitter and data scheduling condition of the data stream, and the scheduling configuration for the data stream may include SPS and/or CG. In some embodiments, the base station can flexibly adjust and indicate SPS/CG for different data streams by being scrambled with different CS-RNTI according to factors of data streams such as packet size, jitter, data scheduling condition and so on during data transmission. In this way, the base station can detect/evaluate the data transmission condition in the process of data transmission, and perform scheduling, such as SPS/CG, by configuring CS-RNTI according to the data transmission condition. The data transmission condition can be detected by the control-side electronic device, such as the base station, or detected by the terminal-side electronic device and provided to the control-side electronic device, or even detected by other appropriate devices in the wireless communication network and provided to the control-side electronic device. Therefore, by configuring multiple CS-RNTIs, the base station can send DCI to adjust SPS/CG for one or more data streams at any time, and the base station has higher flexibility. Generally speaking, compared to the scheme of designing DCI to support multiple TB while indicating multiple SPS/CG configurations, the scheme of configuring multiple CS-RNTIs is more flexible, with less changes to standards and lower increasement of complexity.

On the other hand, according to an embodiment of the present disclosure, resources can be allocated for data streams included in multi-stream data transmission, that are not assigned with scheduling identification information, through resource allocation signaling (RRC) for transmission. Specifically, data streams included in multi-stream data transmission that are not assigned with scheduling identification information may include data streams of fixed size, especially periodic data streams of fixed size, which may be included in uplink data transmission and/or downlink data transmission, as described above. In particular, the allocating resources for transmission through resource configuration signaling (RRC) can be applied to various scheduling configurations for data streams, such as semi-persistent scheduling (SPS) and/or configure grant (CG). Of course, the data stream can also be a data stream with other characteristics in multi-stream data transmission, as long as the data stream needs to/can be statically allocated resources for transmission.

In an example, for uplink data streams, for CG, it can be set in Type 1 of CG that the data stream can take effect by being directly configured via RRC. In particular, in TS 38.331, there is an information element (IE) ***ConfiguredGrantConfig*** dedicated to CG configuration in RRC signaling, which can define configuring the uplink data transmission configuration according to two possible schemes, including RRC (Scheme/Type 1) or PDCCH (that may be associated with CS-RNTI) (Scheme/Type 2). Therefore, for data streams of fixed sizes, resources can be specifically allocated for transmission through, for example, an information element ***"RRC-ConfiguredUplinkGrant"*** based on Scheme/Type 1, while for other data streams, resource information can be activated and transmitted through PDCCH based on Scheme/Type 2.

In some embodiments, for downlink data streams, for SPS, considering that there is no data stream type clearly defined in SPS relevant rules in the existing standards, the present disclosure further proposes to optimize the SPS configuration, in particular, a type 1 configuration similar to CG type 1 can be extended to SPS, which can be achieved by modifying the SPS configuration IE (***SPS-config***) in the existing standard or adding SPS-related information elements (IE) in the existing standards in addition to the SPS configuration IE (***SPS-config***), so that the SPS configuration can concurrently support two types, including scheme/type 1 adopting RRC and scheme/type 2 adopting PDCCH (which may be associated with CS-RNTI), as both types 1 and 2 concurrently indicated in CG. The reason for introducing SPS type 1 is that since some data streams are periodic data streams of fixed sizes, without needing dynamic control, a method of taking effect immediately via RRC configuration (type 1) can be used, avoiding indicating effective and invalid via DCI activation and deactivation after configuration (type 2), thus reducing DCI decoding overhead.

In one example, ***SPS-config*** in the existing standard can be modified, including adding SPS type indication and corresponding Type 1 configuration parameters in ***SPS-config,*** and optionally adding additional parameters, while the SPS configuration specified in the existing standard would become Type 2, which can be used for association with CS-RNTI. In this way, the modified ***SPS-config*** can support the aforementioned two types: type 1 and type 2 concurrently, just like CG, so it can be considered that ***SPS-config*** is equivalent to ***ConfiguredSPSConfig.*** In another example, in addition to ***SPS-Config*** in the existing standard, a SPS relevant information element (IE) ***SPS-Config type_I*** can be further newly added, which can be specially used to configure SPS type 1, by combining ***SPS-Config type_I*** with ***SPS-Config*** in the existing standard, it is possible to support the aforementioned SPS type 1 and/or type 2 concurrently. In particular, by configuring such two information elements **(*SPS-Config_type_I*, *SPS-Config*)** separately or concurrently, it indicates separate type 1 transmission or type 2 transmission, or both types 1 and 2 transmissions concurrently. For example, for a fixed-size downlink data steam, resources can be specifically configured for transmission through RRC, such as the added information element ***"RRC-ConfiguredDownlinkSPS",*** based on scheme/type 1, without needing operations such as DCI activation/deactivation. In some embodiments, if DCI is not used for deactivation to save energy, then whether signaling indication is needed may be implemented by the control-side device, such as the base station. That is to say, the control-side device can indicate whether to not use DCI for deactivation to save energy through signaling.

For example, in VR downlink multi-stream data communication, the multiple streams may include two streams, one of which is an audio/data stream that is periodic and of fixed size, and the other is a video stream that has a characteristic of non-fixed packet size. In this case, the optimized scheduling configuration according to embodiments of the present disclosure, especially the semi-persistent (SPS) configuration, can be effectively applied. Among them, transmission resources and effective duration (and offset) for the downlink audio/data stream can be directly configured in RRC signaling, and the corresponding audio/data stream transmission starts after the offset time corresponding to the RRC signaling, in addition, the semi-persistent resource configuration for the video stream can be activated by associating with CS-RNTI through PDCCH, and then the corresponding video stream transmission starts.

According to an embodiment of the present disclosure, the scheduling identification information, such as CS-RNTI, can be expressed in various appropriate forms, or added to transmission signaling in various appropriate ways to be transmitted. The identification information can be in any form and can be transmitted with any suitable field/bit. For example, when there are multiple CS-RNTIs, additional CS-RNTIs can be indicated by adding a new field in the current transmission signaling. As another example, additional CS-RNTIs can also be indicated by adopting different values in a corresponding field in the current transmission signaling.

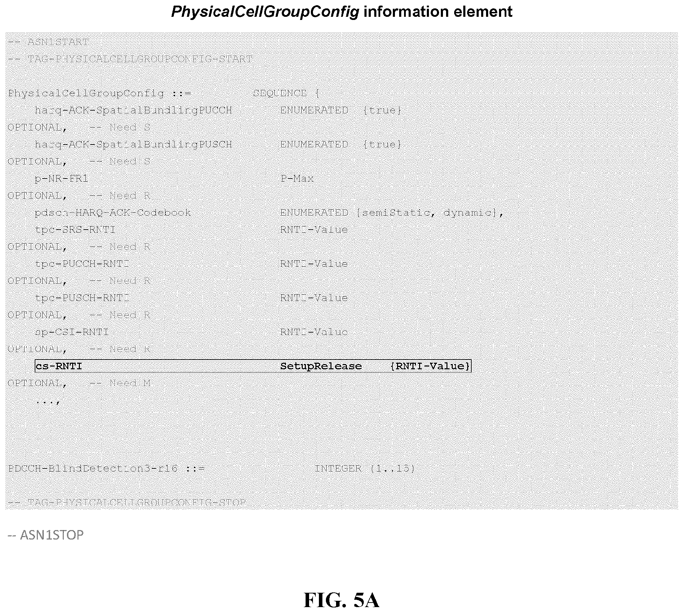

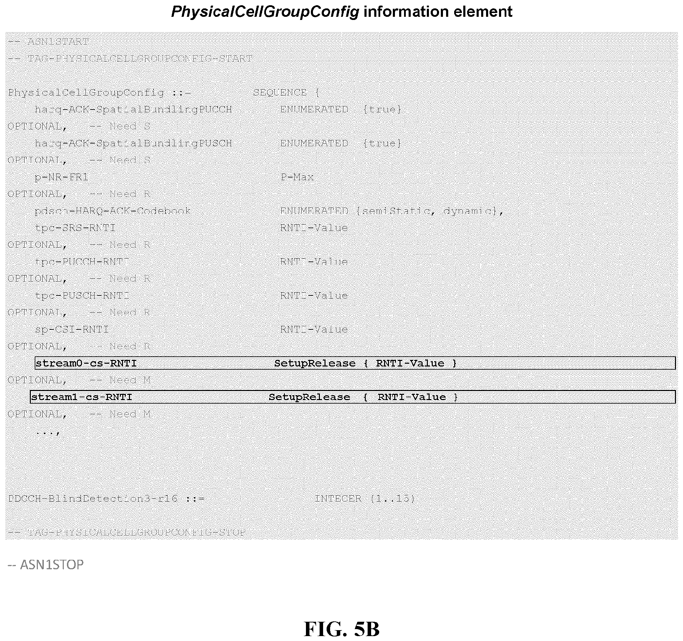

In some embodiments, the enclosed part in TS 38.331 ***PhysicalCell GroupConfig information element*** can be modified, as shown in FIG. 5A. In one example, a plurality of CS-RNTI values can be added, and CS-RNTIs can correspond to different data streams in the arrangement order of CS-RNTIs, for example, the first ranked CS-RNTI corresponds to a first stream ID1, the second ranked CS-RNTI corresponds to a second stream ID2, and so on. In another example, such a parameter pair (CS-RNTI value, stream /SPS/CG ID) can be added to associate CS-RNTI with the stream ID or SPS/CG ID, that is, when a CS-RNTI is configured, the stream corresponding to the CS-RNTI will be specified at the same time, as shown in FIG. 5B.

In another embodiment, following TS 38.331 ***SearchSpace information element**,* CS-RNTI can be modified to multi/all CS-RNTI or CS-RNTIs, to cover all CS-RNTIs set by RRC.

In yet another embodiment, the following description in TS38.213 is modified.

| |
|---|
| ***ue-Specific*** |
| Configures this search space as UE specific search space (USS). The UE monitors the DCI format with CRC scrambled by C-RNTI, CS-RNTI (if configured), and SP-CSI-RNTI (if configured) |

In particular, CS-RNTI is intended to be changed to multi/all CS-RNTI or CS-RNTIs, so that RNTI descrambling can cover all CS-RNTIs set by RRC. In particular, other parts containing CS-RNTI should be similarly modified.

According to an embodiment of the present disclosure, the terminal-side device receives the control information, acquires the control information through a specific detection process, and decodes the control information so as to perform uplink and/or downlink data transmission on dynamic resources specified in the control information. Especially, when DCI serves as control information, DCI will be detected for localization. As an example, the terminal-side device can determine which data stream the adjustment to SPS/CG carried by the current DCI is directed to, by descrambling CS-RNTI when decoding the PDCCH.

Especially, when the terminal-side device detects the control information, such detection is usually performed in a wide range specified by the system in advance, which can be referred to as blind detection. Take DL DCI containing DCI format information as an example. Blind detection means performing blind detection for all candidate PDCCHs in all search space set (SSS), and the candidate PDCCHs configured in each SSS are realized by associating PDCCHs with DCI formats and aggregation levels (AL). In addition, in a case that both uplink and downlink transmissions are performed, it is often necessary to perform blind detection for UL DCI and DL DCI respectively to locate UL DCI and DL DCI. It should be pointed out that the blind detection can be performed at any appropriate stage during the communication, for example, SPS/CG activation, deactivation, adjustment and other stages. In this way, UE shall attempt to descramble RNTI for each PDCCHCH candidate during blind detection, so that for different CS- RNTIs, it can be determined which data stream the adjustment to SPS/CG carried by the current DCI is directed to.

According to an embodiment of the present disclosure, the processing circuit is configured to set a search space (SS), in which the terminal-side device can perform detection, to contain all configured scheduling identification information. Especially, when setting the SS, if the base station only sets one CS-RNTI, there is no need to modify the SS configuration (consistent with the existing standards). If the number of CS-RNTIs set by the base station is greater than 1, it is necessary to attempt to decode all set CS-RNTI when setting PDCCH candidates in SS, however, since the attempts for CS-RNTI do not influence times of decoding in PDCCH blind detection, the complexity of one descrambling is only a 16-bit modulo-2 operation and one CRC operation, which brings very low additional complexity (this part may not be reflected in the RRC SS setting, but in the TS 38.213 UE blind detection). Through this scheme, it is proposed to set multiple CS-RNTIs and add descrambling of multiple CS-RNTIs in the SS setting to support flexible configuration indication of multi-stream SPS/CG.

According to an embodiment of the present disclosure, the blind detection operation on the terminal side can be improved/optimized, especially the number of blind detection operations on the terminal side can be reduced. In some embodiments, the transmission of control information (DCI) and/or the switching of scheduling configuration (SPS/CG) can be optimized, to reduce the number of detection operations performed on the dynamic control information or reduce the switching of scheduling configuration (SPS/CG), thereby reducing the number of detection/blind detection for the control information and improving the power consumption on the terminal side.

According to an embodiment of the present disclosure, activation information related to the scheduling configuration can be preset, the activation information indicates activation settings of the scheduling configuration, including activation time, number of activation cycles, number of activation times, etc., which is also equivalent to setting an activation condition for the scheduling configuration, such as activation time, number of cycles, number of activation times, etc. Therefore, when the activation setting indicated by the activation information is satisfied, that is, when the activation condition expires, the state of the scheduling configuration can be automatically switched. As an example, when the activation information indicates the activation time, the state of the scheduling configuration can be automatically switched when the activation time indicated by the activation information expires. As another example, when the activation information indicates the number of activation cycles/times N, the state of the scheduling configuration can be automatically switched when the number of times N is reached after N cycles.

In an embodiment, in a case of automatically switching to a specific transmission configuration when the activation time/number of activation cycles/times expires, data transmission of a specific data stream can be performed according to the switched specific transmission configuration, without descrambling the control information. As an example, when the activation time/number of activation cycles/times expires, a default transmission configuration can be automatically switched to, so that the data transmission can be performed according to the default transmission configuration instead of transmitting data according to the original configuration. In another embodiment, when the activation time/number of activation cycles/times expires, the scheduling configuration can be automatically switched to a deactivated state, so that data transmission terminates, and data is no longer transmitted.

Especially, in some embodiments, the activation of SPS/CG can be optimized, especially by setting the activation time/cycle of SPS/CG in advance, so as to automatically switch the state of SPS/CG after reaching a specific time/cycle, thus avoiding/omitting the blind detection at switching the state and optimizing the blind detection on the terminal side.

According to an embodiment of the present disclosure, the processing circuit may be further configured to indicate an activation setting of SPS/CG by using specific information as the activation information in activation DCI. In particular, the specific information is an activation time, a number of activation cycles, or an index value indicating the activation time or the number of activation cycles. In some embodiments, the specific information is a bit added in the activation DCI or an existing bit in the activation DCI. In one example, the added bit/reserved bit may be an absolute value, its unit may be time slot/symbol or other. In another example, the added bit/reserved bit can also be an index, which indicates a certain activation time in an activation time set or the number of activation cycles set by RRC.

Specifically, in order to reduce the complexity of blind detection caused by using two DCIs to indicate the activation and deactivation of SPS/CG, new bits can be added into the activation DCI or reserved bits therein can be used to indicate the activation time/cycle of SPS/CG. The indicated activation time can be used to indicate an activation time window set by the current DCI for SPS/CG transmission, when a timer expires, the SPS/CG will automatically switch to the deactivation state, which saves the process of using another DCI for deactivation indication in the existing protocol. The same is true for the number of activation cycles. Therefore, by utilizing a newly added bit/reserved bit in DCI to indicate the activation time/cycle, the deactivation can be performed automatically when the indicated duration/cycle expires, so that it can avoid utilization of DCI for deactivation. In this way, a round of blind detection can be saved, and the energy saving of XR device can be realized.

Moreover, activation time setting/optimization can be equivalent to reducing the transmission of DCI so as to reduce the corresponding blind detection. Especially, because some XR traffic streams have non-fixed size packets, jitter, and possible packet dropping, and there are also some possible UE assistance information (UAI) reporting and RAN-awareness information, the frequency of parameter adjustment for SPS/CG is relatively high, the adjustment duration/activation is relatively short, and the base station obtains more service priori information, so the prediction of activation time is relatively accurate. In order to reduce the complexity of DCI blind detection, the method in which the DCI indicating activation/parameter adjustment indicates activation time and timer timeout can switch to the deactivation state can save one DCI downlink transmission, that is, one round of blind detection, which is helpful for UE to save energy.

According to an embodiment of the present disclosure, alternatively or additionally, the control-side device may be configured to include a plurality of SPS/CG activation time/cycle in an activation time/cycle set for setting SPS/CG in RRC. Then the base station sends the RRC configuration to the UE. In some embodiments, the activation time/cycle, especially the activation time/cycle set, may be in any suitable form. As an example, the activation time/cycle set can be configured in TS 38.331, and the activation DCI can be configured to contain activation time/cycle indication information. As another example, the DCI format in TS38.212 can be configured to contain a bit field indicating the activation time/cycle. However, when the bit field is a special value (such as all zeros), it is equivalent to not indicate the activation time/cycle, which is consistent with the existing standards. In addition, an activation timer can be added on the UE side, and the setting of the activation timer can correspond to the activation time/cycle indication information, so that when the timer expires, the UE can perform data processing when the DCI state is automatically switched.

Some exemplary implementations of a multi-stream data transmission scheme according to an embodiment of the present disclosure will be described below with reference to the drawings. In some embodiments of the present disclosure, the multi-stream data transmission scheme according to the embodiments of the present disclosure can be applied to uplink multi-stream data transmission, downlink multi-stream data transmission, or both uplink multi-stream data transmission and downlink multi-stream data transmission.

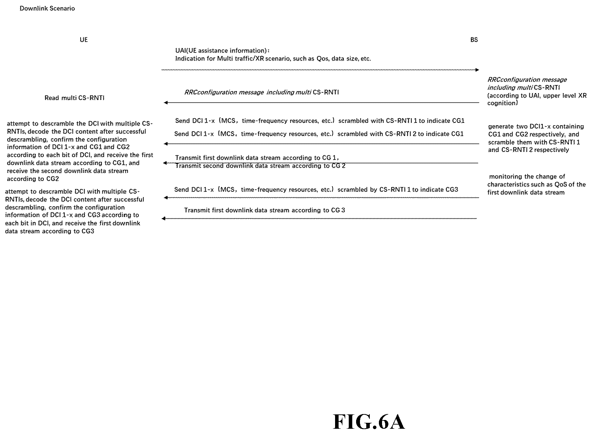

Hereinafter, the multi-stream data transmission according to an embodiment of the present disclosure will be described with taking a downlink scenario as an example. Fig. 6A shows multi-stream data transmission according to an embodiment of the present disclosure, which particularly illustrates SPS is utilized in the downlink multi-stream data transmission, which may involve I stream and P stream.

First, the terminal-side device reports assistance information, such as UE assistance information (UAI), to the control-side device, so that the control-side device can know status of each terminal-side device and perform configuration/scheduling for the terminal-side device. For example, the UAI may include various appropriate information, such as, but not limited to, quality of service (QoS), size, etc. of various services, various XR scenario indications, etc. In addition, the terminal-side device can also send trigger information/WakeUp signal (WUS) to the control-side device, for example, via the PDCCH, which is not shown in the figure.

Then, the control-side device can generate configuration information and send the configuration information to the terminal-side device. The configuration information can include Radio Resource Configuration (RRC) information, which can be indicated by ***RRCConfiguration*** in communication signaling. The radio resource configuration information can include multiple CS-RNTIs, which are configured for respective data streams in data communication. CS-RNTI can be generated appropriately. In one embodiment, it can be generated based on UAI, upper layer XR cognition, etc. Correspondingly, the terminal-side device can read multiple CS-RNTIs.

Furthermore, the control-side device can generate two DCI1-x containing SPS1 and SPS2 respectively, and scramble them with CS-RNTI 1 and CS-RNTI 2 respectively. These can be applied to two streams in the multi-stream data transmission, such as I stream and P stream. Then, the control-side device can send DCI 1-x (MCS, time-frequency resources, etc.) scrambled with CS-RNTI 1 to indicate SPS1, and send DCI 1-x (MCS, time-frequency resources, etc.) scrambled with CS-RNTI 2 to indicate SPS2. Moreover, the control-side device also transmits a first downlink data stream according to SPS1 and transmits a second downlink data stream according to SPS2.

Upon receipt of contents transmitted from the control-side device, the terminal-side device can attempt to descramble the DCI with multiple CS-RNTIs, decode the DCI content after successful descrambling, confirm the configuration information of DCI 1-x and SPS1 and SPS2 according to each bit of DCI, and receive the first downlink data stream according to SPS1, and receive the second downlink data stream according to SPS2.

In addition, during communication, the control-side device can also detect the quality of communication between the control-side device and the terminal-side device, such as monitoring the change of characteristics such as QoS of the first downlink data stream, etc., and can make dynamic adjustment to optimize transmission when the characteristic change is detected, for example, when the communication quality is influenced. For example, the control-side device sends DCI 1-x (MCS, time-frequency resources, etc.) scrambled with CS-RNTI 1 to indicate SPS3, and transmits the first downlink data stream according to SPS3. Correspondingly, the terminal-side device can attempt to descramble DCI with multiple CS-RNTIs, decode the DCI content after successful descrambling, confirm the configuration information of DCI 1-x and SPS3 according to each bit in DCI, and receive the first downlink data stream according to SPS3.

It should be noted that the dynamic adjustment can be equivalently applied to adjustment of the second downlink data stream. In addition, it should be pointed out that the signaling interaction of downlink data transmission as shown in FIG. 6A can also be applied to other types of data streams in the multi-stream data transmission, such as the third or more downlink data streams, such as B stream, other types of streams.

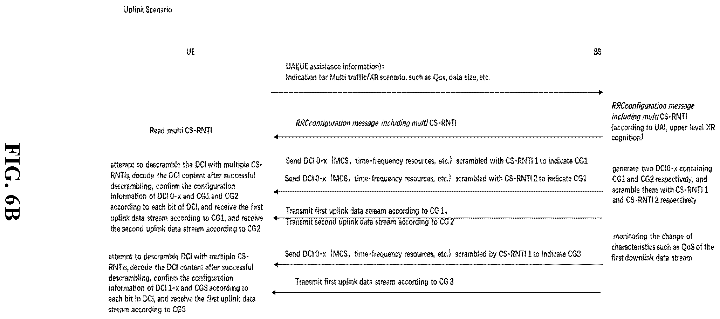

Fig. 6B illustrates multi-stream data transmission according to an embodiment of the present disclosure, which particularly illustrates CG in the uplink data transmission, which may involve I stream and P stream in data transmission.

First, the terminal-side device reports assistance information, and the control-side device can generate configuration information and send the configuration information to the terminal-side device, the configuration information can be Radio Resource Configuration information including multiple CS-RNTIs, which can be operated as mentioned above with reference to FIG. 2A.

Furthermore, the control-side device can generate two DCI 0-x containing CG 1 and CG 2 respectively, and scramble them by CS-RNTI 1 and CS-RNTI 2 respectively. These can be applied to two streams in the multi-stream data transmission, such as I stream and P stream. Then, the control-side device can send DCI 0-x (MCS, time-frequency resources, etc.) scrambled with CS-RNTI 1 to indicate CG1, and send DCI 0-x (MCS, time-frequency resources, etc.) scrambled with CS-RNTI 2 to indicate CG2.

Upon receipt of contents transmitted from the control-side device, the terminal-side device can attempt to descramble the DCI with multiple CS-RNTIs, decode the DCI content after successful descrambling, confirm the configuration information of DCI 0-x and CG1 and CG2 according to each bit of DCI, and send a first uplink data stream according to CG1, and send a second uplink data stream according to CG2.

Moreover, during communication, the control-side device can also detect the quality of communication between the control-side device and the terminal-side device, and for example, can make dynamic adjustment when the communication quality of the first uplink data stream changes, for example, the control-side device sends DCI 0-x (MCS, time-frequency resources, etc.) scrambled with CS-RNTI 1 to indicate CG3, correspondingly, the terminal-side device can attempt to descramble DCI with multiple CS-RNTIs, decode the DCI content after successful descrambling, confirm the configuration information of DCI 0-x and CG3 according to each bit in DCI, and transmit the first uplink data stream according to CG3.

It should be noted that the dynamic adjustment can be equivalently applied to adjustment of the second uplink data stream. In addition, it should be pointed out that the signaling interaction of uplink data transmission as shown in FIG. 6B can also be applied to other types of data streams in the multi-stream data transmission, such as the third or more uplink data streams, such as B stream, other types of streams.

In some implementations of the scheme of the present disclosure, the multi-stream data transmission scheme according to an embodiment of the present disclosure can be applied to different streams in the multi-stream data transmission. For example, in the case that the multi-stream data contains I stream and P stream, the scheme can be applied to at least one of I stream and P stream, respectively.

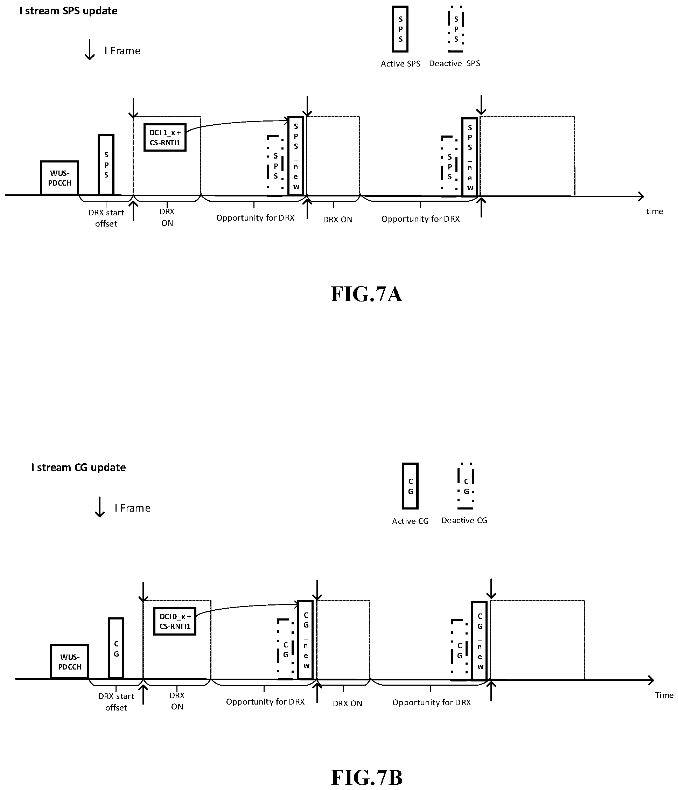

Figs. 7A-7C illustrate scheduling update/adjustment in multi-stream data transmission according to an embodiment of the present disclosure.

FIG. 7A shows a timing diagram of realizing SPS configuration update for a single stream by using DCI and CS-RNTI, while FIG. 7B shows a timing diagram of realizing CG configuration update for a single stream by using DCI and CS-RNTI. Among them, the configuration update for I-stream is indicated by DCI scrambled by CS-RNTI 1, where DCI 0-x indicates CG update for I-stream and DCI 1-x indicates SPS update for I-stream. Especially, during DRX activation, the DCI scrambled by CS-RNTI 1 is transmitted to realize SPS/CG configuration update, so that the updated SPS configuration (SPS_new)/CG configuration (CG_new) can be employed to realize data transmission in the subsequent DRX process. SPS and CG configurations for other streams are not drawn in the figure.

Furthermore, the SPS/CG configuration update for a single stream shown in FIGs. 7A and 7B can be also applicable to the indication of SPS and CG configuration update for only P stream, where the configuration update for P stream can be indicated by DCI scrambled by CS-RNTI2, where DCI 0-x indicates CG update for P stream and DCI 1-x indicates SPS update for P stream. It should be pointed out that the SPS/CG configuration update shown here can also be applicable to other streams in multi-stream data transmission, such as B stream.

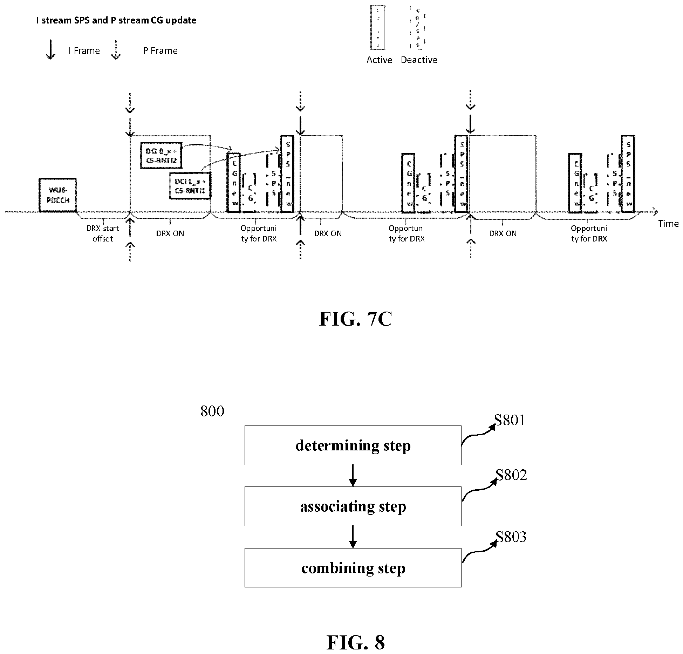

Fig. 7C exemplarily shows SPS/CG configuration update for two streams, especially shows that the configuration update for I-frame SPS and P-frame CG can be realized by two DCIs, including DCI 0_x+CS-RNTI2 and DCI 1_x+CS-RNTI1. Particularly, during DRX activation, DCI 1_x scrambled by CS-RNTI 1 and DCI0_x scrambled by CS-RNTI 21 can be transmitted to realize the update of SPS/CG configuration, so that both the updated SPS configuration (SPS_new) and CG configuration (CG_new) can be employed to realize data transmission in the subsequent DRX process. SPS and CG configurations of other streams are not drawn in the figure. It should be pointed out that the SPS/CG configuration update shown here can also be applied to other streams in multi-stream data transmission, such as CS for I stream and SPS for P stream, such as B stream and so on. It should be pointed out that the configuration update scheme for two streams shown in FIG. 7C can also be extended to more SPS/CG configuration updates for more streams. For example, during DRX ON, the SPS/CG configuration update for 3 or 4 streams can also be indicated by transmitting 3 or 4 DCIs.

It should be noted that the above-described exemplary SPS/CG configuration update shown in FIGs. 7A to 7C can be equivalently applied to uplink data transmission and downlink data transmission.

Therefore, according to an embodiment of the present disclosure, corresponding scheduling identification information can be configured for data streams in the XR service, especially scheduling of data streams (such as SPS/CG), so that the XR multidata stream transmission requirements with non-fixed packet sizes and different QoS requirements can be flexibly dealt with, and the data stream transmission enhancement can be realized. In addition, the scheme according to an embodiment of the present disclosure can optimize the blind detection operation of the terminal-side device, for example, by setting the activation time in advance to reduce the blind detection times on the terminal-side device, thereby reducing the complexity of blind detection at the terminal-side device, thus realizing a simple and feasible multi-stream SPS/CG transmission enhancement scheme.

The above describes the structure and operation of the control-side electronic device in the wireless communication system. It should be pointed out that the control side can be a party in the wireless communication system that initiates downlink communication and/or receives uplink communication, and it can be appropriately selected according to the signal transmission direction in the wireless communication scenario, for example, when downlink communication is performed from a base station to a user terminal, the control side can refer to the base station side, and when downlink communication is performed from other devices to the base station in the wireless communication system, the control side can refer to the other device side. It should be noted that the electronic device may correspond to a device in a wireless communication system communicating in a communication scenario (such as an access point, a base station, etc. in the communication system) itself, or an electronic device used in combination with the device.

**In** the structural example of the above device, the processing circuit may be in the form of a general-purpose processor or a special-purpose processing circuit, such as ASIC. For example, the processing circuit can be constructed by a circuit (hardware) or a central processing device such as a central processing unit (CPU). In addition, the processing circuit can carry programs (software) for making the circuit (hardware) or central processing device work. The program can be stored in a memory (such as arranged in the memory) or an external storage medium connected from the outside, and downloaded via a network (such as the Internet).

According to one embodiment, the processing circuit 302 may include various units for correspondingly implementing the above operations, for example, a determining unit 304 configured to determine an amount of scheduling identification information configured for the terminal-side electronic device, based on data transmission characteristics of data streams included in the multi-stream data transmission; an association unit 306, configured to, in response to it is determined to configure multiple pieces of scheduling identification information, associate the multiple pieces of scheduling identification information with multiple data streams included in the multi-stream data transmission; and a combination unit 308 configured to, for a specific data stream in the multi-stream data transmission, combine scheduling identification information associated with the specific data stream and control information (DCI) for scheduling the specific data stream, for transmission of the specific data stream.

In some embodiments, the association unit 306 may be configured to associate the multiple pieces of scheduling identification information with data streams included in the multi-stream data transmission according to arrangement order of the scheduling identification information, and/or set association pairs between the data streams and the scheduling identification information when the scheduling identification information is configured.

In some embodiments, the association unit 306 may be further configured to associate the scheduling identification information with the scheduling configuration for the data stream, and the combination unit 308 may be configured to, for a specific data stream in the multi-stream data transmission, combine scheduling identification information associated with the scheduling configuration for the specific data stream and control information for scheduling configuration for the specific data stream .

In some embodiments, the combination unit 306 may be further configured to adjust the scheduling configuration for data streams based on a data transmission condition during data transmission, wherein the data transmission condition includes at least one of a packet size, a jitter, and a data scheduling condition of a data stream, and the processing circuit 302 may further include a transmission unit 310 configured to transmit control information and combined scheduling identification information through radio resource control signaling when multi-stream data transmission is started or after scheduling identification information adjustment during data transmission.

In some embodiments, the processing circuit 302 may include an activation setting unit 312 configured to preset activation information about specific scheduling configuration for a data stream, so that a state of the scheduling configuration is automatically switched when an activation condition indicated by the activation information expires.

In some embodiments, the processing circuit 302 may include a search space configuration unit configured to configure a search space in which the terminal-side device performs detection to include all configured scheduling identification information.

In some embodiments, the processing circuit 302 may include an acquisition unit configured to acquire information about data transmission characteristics and/or acquire information about data transmission conditions, and the acquisition unit may acquire the above information from the control-side electronic device or other appropriate devices in the wireless communication network.

It should be pointed out that the transmission unit, the search space configuration unit, and the acquisition unit are not necessarily included in the processing circuit, but may also be located outside the processing circuit, even outside the electronic device 300.

Each of the above units can operate as described above and will not be described in detail here. It should be noted that the above-mentioned units are only logical modules divided according to their specific functions, and are not used to limit the specific implementation, for example, they can be implemented in software, hardware or a combination of software and hardware. In actual implementation, the above units can be realized as independent physical entities, or can also be realized by a single entity (for example, a processor (CPU or DSP, etc.), an integrated circuit, etc.). It should be noted that although units are shown as separate units in Figure 3, one or more of these units may be combined into one unit or split into multiple units. In addition, the above-mentioned units are shown by dotted lines in the drawings, indicating that these units may not actually exist, and the operations/functions they realize may be realized by the processing circuit itself.

It should be understood that FIG. 3 is only a schematic structural configuration of the control-side electronic device in the wireless communication system, alternatively, the control-side electronic device 300 may also include other components not shown, such as a memory, a radio frequency link, a baseband processing unit, a network interface, a controller, and the like. Processing circuitry may be associated with a memory and/or an antenna. For example, the processing circuit can be directly or indirectly connected to the memory (for example, other components may be connected in the middle) to access data. The memory can store various information obtained and generated by the processing circuit 302 (e.g., vehicle internal condition information and its analysis results, etc.), programs and data used for the operation of the buyer's electronic device, data to be sent by the buyer's electronic device, etc. The memory can also be located in the buyer's electronic device but outside the processing circuit, or even outside the buyer's electronic device. The memory may be a volatile memory and/or a nonvolatile memory. For example, the memory may include, but not limited to, random access memory (RAM), dynamic random-access memory (DRAM), static random-access memory (SRAM), read-only memory (ROM), and flash memory.

As another example, the processing circuit may be directly or indirectly connected to the antenna to transmit information and receive requests/instructions via the antenna. For example, as an example, the antenna may be an omni-directional antenna and/or a directional antenna, which may be realized in various ways, such as an antenna array (such as both the omni-directional antenna and the directional antenna, or a single antenna array capable of realizing the functions of both the omni-directional antenna and the directional antenna) and/or a communication part such as a radio frequency link, which will not be described in detail here. As an example, the antenna may also be included in the processing circuit, or outside the processing circuit. It can even be coupled/attached to the electronic device 300 without being included in the electronic device 300.

Hereinafter, a method for a control side of a wireless communication system according to an embodiment of the present disclosure will be described with reference to the accompanying drawings, and FIG. 8 shows a flowchart of a method 800 for a control side of a wireless communication system according to an embodiment of the present disclosure. The method can be executed by a control-side electronic device in a wireless communication system, and the control-side electronic device can perform multi-stream data transmission with a terminal-side electronic device in the wireless communication system. In this method,
In step S801 (determination step), an amount of scheduling identification information configured for the terminal-side electronic device can be determined based on data transmission characteristics of data streams included in the multi-stream data transmission;
In step S802 (association step), when it is determined to configure multiple pieces of scheduling identification information, the multiple pieces of scheduling identification information can be associated with multiple data streams included in the multi-stream data transmission; and
In step S803 (combination step), for a specific data stream in the multi-stream data transmission, the scheduling identification information associated with the specific data stream is combined with control information (DCI) for scheduling the specific data stream, for transmission of the specific data stream.

In addition, the method can also include corresponding steps to realize the operations performed by the electronic device on the control side as described above, in particular, a transmission step of transmitting control information and combined scheduling identification information through radio resource control signaling when multi-stream data transmission is started or after scheduling identification information adjustment during data transmission; an activation setting step of presetting activation information about specific scheduling configuration for a data stream, so that a state of the scheduling configuration is automatically switched when an activation condition indicated by the activation information expires; a search space configuration step of configuring a search space in which the terminal-side device performs detection to include all configured scheduling identification information; and an acquisition step of acquiring information about data transmission characteristics and/or acquiring information about data transmission conditions, and the above information may be acquired from the control-side electronic device or other appropriate devices in the wireless communication network.

It should be noted that these steps can be performed by the aforementioned control-side electronic device according to the present disclosure, in particular, by corresponding units of the aforementioned control-side electronic device according to the present disclosure.

A terminal-side electronic device in a wireless communication system according to an embodiment of the present disclosure will be described below. The terminal side can be a party in the wireless communication system that receives downlink communication and/or initiate uplink communication, and it can be appropriately selected according to the signal transmission direction in the wireless communication scene. For example, when downlink communication is conducted from a base station to a user terminal, the terminal side can refer to the user terminal side, and when downlink communication is conducted from other device to the base station in the wireless communication system, the terminal side can refer to the base station side. It should be noted that the terminal-side electronic device may correspond to a device communicating in a communication scenario in a wireless communication system (such as an access point, a user terminal, etc. in the communication system) itself, or be an electronic device used in combination with the device.

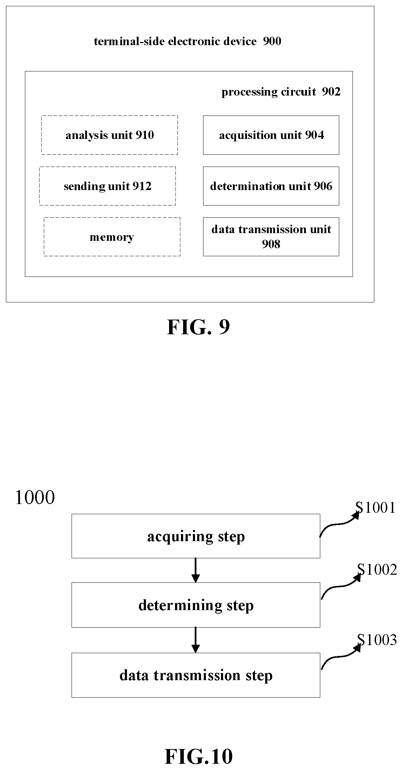

Fig. 9 shows a block diagram of a terminal-side electronic device according to an embodiment of the present disclosure. The terminal-side electronic device 900 can perform multi-stream data transmission with the control-side electronic device in the wireless communication system, and the terminal-side electronic device 900 includes a processing circuit 902 configured to acquire combination information of specific scheduling identification information and specific control information, wherein the specific scheduling identification information is selected from at least two pieces of scheduling identification information associated with data streams in the multi-stream data transmission that configured based on data transmission characteristics of the data streams; determine a specific data stream associated with the specific scheduling identification information based on the specific scheduling identification information, and perform data transmission of the specific data stream based on the specific control information. Here, the meanings and settings of multi-stream data transmission, data transmission characteristics, scheduling identification information and control information can be as described above, and will not be described in detail here.

In some embodiments, the combination information can be represented as specific control information scrambled by the specific scheduling identification information, and the processing circuit is further configured to attempt to descramble the specific control information by using multiple pieces of scheduling identification information to acquire the specific scheduling identification information, and perform decoding based on the specific scheduling identification information to obtain the specific control information.

In some embodiments, the processing circuit is further configured to determine a scheduling configuration for a specific data stream associated with the specific scheduling identification information based on the specific control information, and perform data transmission of the specific data stream based on the scheduling configuration.

In some embodiments, the processing circuit is further configured to acquire activation information about scheduling configuration from the specific control information, and when an activation condition indicated by the activation information expires, perform data transmission of a specific data stream under the state of automatically switching the scheduling configuration, without performing scrambling of the control information.

In some embodiments, the processing circuit is further configured to provide information including at least the data transmission characteristics to the control-side electronic device.

In some embodiments, the processing circuit is further configured to acquire a condition about data transmission between the terminal-side electronic device and the control-side electronic device, wherein the data transmission condition includes at least one of a packet size, a jitter, and a data scheduling condition of a data stream, and provide the acquired data transmission condition to the control-side electronic device, so that the control-side electronic device is able to adjust the scheduling configuration based on the data transmission condition.

In particular, the operation of the processing circuit of the terminal-side electronic device can be performed in a similar manner to the corresponding operation of the terminal-side electronic device, and will not be described in detail here.

It should be noted that the terminal-side electronic device 900 can be implemented in various appropriate manners, especially in a manner similar to that of the control-side electronic device 300. For example, various units may be included to realize the aforementioned operations/functions, such as the acquisition unit 904, configured to acquire combination information of specific scheduling identification information (e.g., CS-RNTI) and specific control information (e.g., DCI), wherein the specific scheduling identification information is selected from at least two pieces of scheduling identification information associated with data streams in the multi-stream data transmission that configured based on data transmission characteristics of the data streams; determination unit 906 configured to determine a specific data stream associated with the specific scheduling identification information based on the specific scheduling identification information, and data transmission unit 908 configured to perform data transmission of the specific data stream based on the specific control information

In some embodiments, the processing circuit 902 may further include a parsing unit 910 configured to attempt to descramble the specific control information by using multiple pieces of scheduling identification information to acquire the specific scheduling identification information, and perform decoding based on the specific scheduling identification information to obtain the specific control information.

In some embodiments, the parsing unit 910 is further configured to determine a scheduling configuration for a specific data stream associated with the specific scheduling identification information based on the specific control information, and the data transmission unit 908 is configured to perform data transmission of the specific data stream based on the scheduling configuration.

In some embodiments, the parsing unit 910 is further configured to acquire activation information about scheduling configuration from the specific control information, and the data transmission unit 908 is configured to, when an activation condition indicated by the activation information expires, perform data transmission of a specific data stream under the state of automatically switching the scheduling configuration, without performing scrambling of the control information.

In some embodiments, the processing circuit 902 can further include a sending unit 912 which is configured to provide information including at least the data transmission characteristics to the control-side electronic device.

In some embodiments, the processing circuit 902 can further include an unit configured to acquire a condition about data transmission between the terminal-side electronic device and the control-side electronic device, wherein the data transmission condition includes at least one of a packet size, a jitter, and a data scheduling condition of a data stream, and the sending unit 912 can be configured to provide the acquired data transmission condition to the control-side electronic device, so that the control-side electronic device is able to adjust the scheduling configuration based on the data transmission condition

Each of the above units can operate as described above and will not be described in detail here. It should be noted that the above-mentioned units are only logical modules divided according to the specific functions they realize, and are not used to limit the specific implementation, for example, they can be implemented in a form similar to the above-mentioned units of the device 300. In addition, like the device 300 described above, the electronic device 900 can also include other appropriate components, such as a memory, where the memory can be implemented as the storage in the device 300 described above, and will not be described in detail here.

Hereinafter, a method for a control side of a wireless communication system according to an embodiment of the present disclosure will be described with reference to the accompanying drawings, and FIG. 10 shows a flowchart of a method 1000 for a control side of a wireless communication system according to an embodiment of the present disclosure.
In step S1001 (referred to as an acquisition step), acquire combination information of specific scheduling identification information (e.g., CS-RNTI) and specific control information (e.g., DCI), wherein the specific scheduling identification information is selected from at least two pieces of scheduling identification information associated with data streams in the multi-stream data transmission that configured based on data transmission characteristics of the data streams;
In step S1002 (referred to as a determination step), determine a specific data stream associated with the specific scheduling identification information based on the specific scheduling identification information, and
In step S1003 (referred to as a data transmission step), perform data transmission of the specific data stream based on the specific control information.

In addition, the method can also include corresponding steps to realize the operations performed by the terminal-side electronic device described above. It should be noted that these steps can be performed by the aforementioned control-side electronic device according to the present disclosure, in particular, by corresponding units of the aforementioned control-side electronic device according to the present disclosure.

It should be noted that the above description is only exemplary. The embodiments of the present disclosure can also be executed in any other appropriate way, and still can achieve the advantageous effects obtained by the embodiments according to the present disclosure. Furthermore, the embodiments of the present disclosure can also be applied to other similar application instances, and the advantageous effects obtained by embodiments of the present disclosure can still be achieved.

It should be understood that the machine-executable instructions in the machine-readable storage medium or program product according to the embodiments of the present disclosure may be configured to perform operations corresponding to the above-mentioned device and method embodiments. When referring to the above device and method embodiments, the embodiments of the machine-readable storage medium or program product are clear to those skilled in the art, and therefore will not be described repeatedly. Machine-readable storage medium and program products for carrying or including the above-mentioned machine-executable instructions also fall within the scope of the present disclosure. Such a storage medium may include, but not limited to, a floppy disk, an optical disk, a magneto-optical disk, a storage card, a memory stick, and the like.

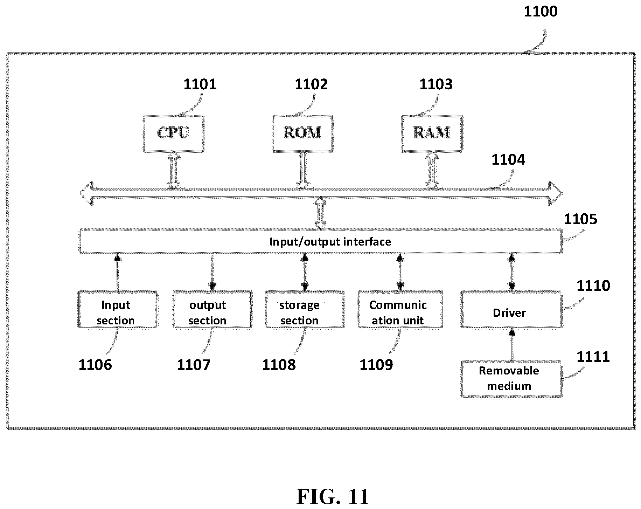

In addition, it should be understood that the processes and devices described above may also be implemented by software and / or firmware. When implemented by software and/or firmware, a program constituting the software is installed from a storage medium or a network to a computer having a dedicated hardware structure, such as a general-purpose personal computer 1100 shown in FIG. 11, and the computer can perform a variety of functions by installing various programs thereon. FIG. 11 is a block diagram illustrating an example structure of a personal computer as an information processing apparatus that can be adopted in an embodiment of the present disclosure. In one example, the personal computer may correspond to the above-described exemplary purchasing-side electronic device or selling-side electronic device according to the present disclosure.

In FIG. 11, a central processing unit (CPU) 1101 performs various processes according to a program stored in a read only memory (ROM) 1102 or a program loaded from a storage section 1108 to a random-access memory (RAM) 1103. In the RAM 1103, data required when the CPU 1101 executes various processes and the like is also stored as necessary.

The CPU 1101, the ROM 1102, and the RAM 1103 are connected to each other via a bus 1104. An input / output interface 1105 is also connected to the bus 1104.

The following components are connected to the input / output interface 1105: an input section 1106 including a keyboard, a mouse, etc.; an output section 1107 including a display, such as a cathode ray tube (CRT), a liquid crystal display (LCD), etc., and a speaker, etc.; a storage section 1108 including hard disks, etc.; and communication section 1109 including network interface cards such as LAN cards, modems, etc. The communication section 1109 performs communication processing via a network such as the Internet.

A driver 1110 is also connected to the input / output interface 1105 as needed. A removable medium 1111 such as a magnetic disk, an optical disk, a magneto-optical disk, a semiconductor memory, etc. is installed on the drive 1110 as needed, so that a computer program read out therefrom can be installed into the storage section 1108 as needed.

In a case where the above-mentioned processes are realized by a software, the programs constituting the software are installed from a network such as the Internet or a storage medium such as a removable medium 1111.

Those skilled in the art should understand that such a storage medium is not limited to the removable medium 1111 shown in FIG. 11 in which the program is stored and which is distributed separately from the device to provide the program to the user. Examples of the removable medium 1111 include a magnetic disk (including a floppy disk (registered trademark)), an optical disk (including a Compact disc read-only memory (CD-ROM) and a digital versatile disk (DVD)), and a magneto-optical disk (including a mini disk (MD) (registered trademark)) and semiconductor memory. Alternatively, the storage medium may be the ROM 1102, a hard disk included in the storage section 1108, and the like, in which programs are stored and which are distributed to users along with the device containing them.

The technology of the present disclosure can be applied to various products.

For example, the control-side electronic devices according to embodiments of the present disclosure can be implemented as a variety of control devices/base stations, or be included therein. For example, the transmitting-side electronic device and/or terminal electronic device according to embodiments of the present disclosure can be implemented as a variety of terminal devices or be included in a variety of terminal devices.

For example, the transmitting-side electronic device/base stations mentioned in this disclosure can be implemented as any type of base station, for example, evolved Node B (eNB), such as macro eNB and small eNB. A small eNB may be an eNB covering a cell smaller than a macro cell, such as a pico eNB, a micro eNB, and a home (femto) eNB. Furthermore, for example, the transmitting-side electronic device/base stations can be implemented as gNB, such as macro gNB and small gNB. A small gNB may be a gNB covering a cell smaller than a macro cell, such as a pico gNB, a micro gNB, and a home (femto) gNB. Alternatively, the base station can be implemented as any other type of base station, such as a NodeB and a Base Transceiver Station (BTS). The base station may include: a main body (also referred to as a base station device) configured to control wireless communication; and one or more remote radio heads (RRHs) disposed at a place different from the main body. In addition, various types of terminals described below can work as base stations by temporarily or semi-persistently performing base station functions.

For example, in some embodiments, the terminal device mentioned in this disclosure can be implemented as a mobile terminal such as a smart phone, a tablet personal computer (PC), a notebook PC, a portable gaming terminal, a portable / dongle Mobile routers and digital cameras, or vehicle terminals such as vehicle navigation equipment. The terminal device can also be implemented as a terminal that performs machine-to-machine (M2M) communication, also called as a machine type communication (MTC) terminal. In addition, the terminal device may be a wireless communication module mounted on each of the terminals described above, such as an integrated circuit module including a single chip.

Examples according to the present disclosure will be described below with reference to the figures.

### [Example of base station]

It should be understood that the term "base station" in this disclosure has the full breadth of its usual meaning and includes at least a wireless communication station that is used as part of a wireless communication system or radio system for communication. Examples of base stations may be, for example but not limited to, the following: maybe one or both of a base transceiver station (BTS) and a base station controller (BSC) in a GSM system, may be one or both of a radio network controller (RNC) and Node B in a WCDMA system, may be eNBs in LTE and LTE-Advanced systems, or may be corresponding network nodes in future communication systems (such as gNB, eLTE eNB, etc. that may appear in 5G communication systems). Part of the functions in the base station of the present disclosure can also be implemented as an entity with control function for communication in D2D, M2M, and V2V communication scenarios, or as an entity that plays a spectrum coordination role in cognitive radio communication scenarios.

### First example

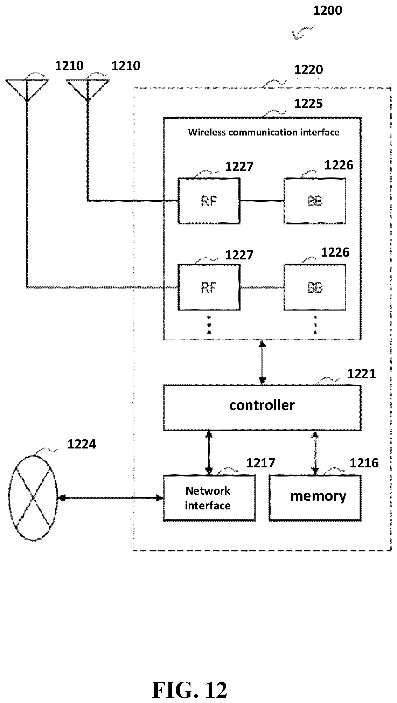

FIG. 12 is a block diagram illustrating a first example of a schematic configuration of a gNB to which the technology of the present disclosure can be applied. The gNB 1200 includes a plurality of antennas 1210 and a base station device 1220. The base station device 1220 and each antenna 1210 may be connected to each other via an RF cable. In an implementation manner, the gNB 1200 (or the base station device 1220) herein may correspond to the above-mentioned transmitting-side and/or receiving-side electronic device.

Each of the antennas 1210 includes a single or multiple antenna elements, such as multiple antenna elements included in a multiple-input multiple-output (MIMO) antenna, and is used for the base station device 1220 to transmit and receive wireless signals. As shown in FIG. 12, the gNB 1200 may include a plurality of antennas 1210. For example, multiple antennas 1210 may be compatible with multiple frequency bands used by gNB 1200.

The base station device 1220 includes a controller 1221, a memory 1222, a network interface 1217, and a wireless communication interface 1225.

The controller 1221 may be, for example, a CPU or a DSP, and operates various functions of the base station device 1220 at a higher layer. For example, the controller 1221 determines position information about a target terminal device in at least one terminal device on the terminal side of a wireless communication system based on the location information and specific position configuration information about the at least one terminal device acquired via a wireless communication interface 1225. The controller 1221 may have logical functions that perform controls such as radio resource control, radio bearer control, mobility management, admission control, and scheduling. The controls can be performed in conjunction with a nearby gNB or core network node. The memory 1222 includes a RAM and a ROM, and stores a program executed by the controller 1221 and various types of control data such as a terminal list, transmission power data, and scheduling data.

The network interface 1217 is a communication interface for connecting the base station device 1220 to the core network 1224. The controller 1221 may communicate with a core network node or another gNB via the network interface 1217. In this case, the gNB 1200 and the core network node or other gNBs may be connected to each other through a logical interface such as an S1 interface and an X2 interface. The network interface 1217 may also be a wired communication interface or a wireless communication interface for a wireless backhaul line. If the network interface 1217 is a wireless communication interface, compared with the frequency band used by the wireless communication interface 1225, the network interface 1217 can use a higher frequency band for wireless communication.

The wireless communication interface 1225 supports any cellular communication scheme such as Long-Term Evolution (LTE) and LTE-Advanced, and provides a wireless connection to a terminal located in a cell of the gNB 1200 via an antenna 1210. The wireless communication interface 1225 may generally include, for example, a baseband (BB) processor 1226 and an RF circuit 1227. The BB processor 1226 may perform, for example, encoding / decoding, modulation / demodulation, and multiplexing / demultiplexing, and execute various types of signal processing in layers such as L1, Medium Access Control (MAC), Radio Link Control (RLC), and Group Data Convergence Protocol (PDCP). As an alternative of the controller 1221, the BB processor 1226 may have a part or all of the above-mentioned logical functions. The BB processor 1226 may be a memory storing a communication control program, or a module including a processor and related circuits configured to execute the program. Updating the program can change the function of the BB processor 1226. The module may be a card or a blade inserted into a slot of the base station device 1220. Alternatively, the module may be a chip mounted on a card or a blade. Meanwhile, the RF circuit 1227 may include, for example, a mixer, a filter, and an amplifier, and transmits and receives a wireless signal via the antenna 1210. Although FIG. 12 illustrates an example in which one RF circuit 1227 is connected to one antenna 1210, the present disclosure is not limited to this illustration, but one RF circuit 1227 may be connected to multiple antennas 1210 at the same time.

As shown in FIG. 12, the wireless communication interface 1225 may include a plurality of BB processors 1226. For example, the plurality of BB processors 1226 may be compatible with multiple frequency bands used by gNB 1200. As shown in FIG. 12, the wireless communication interface 1225 may include a plurality of RF circuits 1227. For example, the plurality of RF circuits 1227 may be compatible with multiple antenna elements. Although FIG. 12 illustrates an example in which the wireless communication interface 1225 includes a plurality of BB processors 1226 and a plurality of RF circuits 1227, the wireless communication interface 1225 may also include a single BB processor 1226 or a single RF circuit 1227.

### Second example

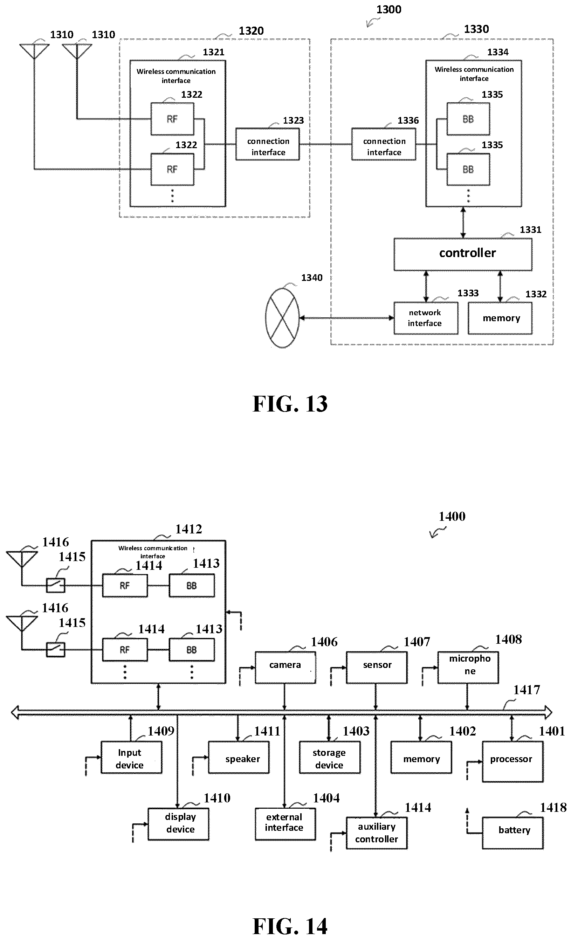

FIG. 13 is a block diagram illustrating a second example of a schematic configuration of a gNB to which the technology of the present disclosure can be applied. The gNB 1300 includes multiple antennas 1310, RRH 1320 and base station equipment 1330. The RRH 1320 and each antenna 1310 may be connected to each other via an RF cable. The base station equipment 1330 and the RRH 1320 may be connected to each other via a high-speed line such as a fiber optic cable. In an implementation manner, the gNB 1300 (or the base station equipment 1330) herein may correspond to the foregoing transmitting-side and/or receiving-side electronic device.

Each of the antennas 1310 includes a single or multiple antenna elements (such as multiple antenna elements included in a MIMO antenna) and is used for RRH 1320 to transmit and receive wireless signals. As shown in FIG. 13, the gNB 1300 may include multiple antennas 1310. For example, multiple antennas 1310 may be compatible with multiple frequency bands used by gNB 1300.

The base station device 1330 includes a controller 1331, a memory 1332, a network interface 1333, a wireless communication interface 1334, and a connection interface 1336. The controller 1331, the memory 1332, and the network interface 1333 are the same as the controller 1221, the memory 1222, and the network interface 1217 described with reference to FIG. 12.

The wireless communication interface 1334 supports any cellular communication scheme such as LTE and LTE-Advanced, and provides wireless communication to a terminal located in a sector corresponding to the RRH 1320 via the RRH 1320 and the antenna 1310. The wireless communication interface 1334 may typically include, for example, a BB processor 1335. The BB processor 1335 is the same as the BB processor 1226 described with reference to FIG. 12 except that the BB processor 1335 is connected to the RF circuit 1322 of the RRH 1320 via the connection interface 1336. As shown in FIG. 13, the wireless communication interface 1334 may include a plurality of BB processors 1335. For example, multiple BB processors 1335 may be compatible with multiple frequency bands used by gNB 1300. Although FIG. 13 illustrates an example in which the wireless communication interface 1334 includes a plurality of BB processors 1335, the wireless communication interface 1334 may also include a single BB processor 1335.

The connection interface 1336 is an interface for connecting the base station device 1330 (wireless communication interface 1334) to the RRH 1320. The connection interface 1336 may also be a communication module for communication in the above-mentioned high-speed line connecting the base station device 1330 (wireless communication interface 1334) to the RRH 1320.

The RRH 1320 includes a connection interface 1323 and a wireless communication interface 1321.

The connection interface 1323 is an interface for connecting the RRH 1320 (wireless communication interface 1321) to the base station device 1330. The connection interface 1323 may also be a communication module for communication in the above-mentioned high-speed line.

The wireless communication interface 1321 transmits and receives wireless signals via the antenna 1310. The wireless communication interface 1321 may generally include, for example, an RF circuit 1322. The RF circuit 1322 may include, for example, a mixer, a filter, and an amplifier, and transmits and receives wireless signals via the antenna 1310. Although FIG. 13 illustrates an example in which one RF circuit 1322 is connected to one antenna 1310, the present disclosure is not limited to this illustration, but one RF circuit 1322 may be connected to multiple antennas 1310 at the same time.

As shown in FIG. 13, the wireless communication interface 1321 may include a plurality of RF circuits 1322. For example, the plurality of RF circuits 1322 may support multiple antenna elements. Although FIG. 13 illustrates an example in which the wireless communication interface 1321 includes a plurality of RF circuits 1322, the wireless communication interface 1321 may include a single RF circuit 1322.

### [Example of user device/terminal device]

### First example

FIG. 14 is a block diagram illustrating an example of a schematic configuration of a communication device 1400, such as smartphone, linker, etc., to which the technology of the present disclosure can be applied. The communication device 1400 includes a processor 1401, a memory 1402, a storage device 1403, an external connection interface 1404, a camera device 1406, a sensor 1407, a microphone 1408, an input device 1409, a display device 1410, a speaker 1411, a wireless communication interface 1412, one or more antenna switches 1415, one or more antennas 1416, a bus 1417, a battery 1418, and an auxiliary controller 1419. In an implementation manner, the communication device 1400 (or the processor 1401) herein may correspond to the foregoing transmitting device or terminal-side electronic device.

The processor 1401 may be, for example, a CPU or a system on chip (SoC), and controls functions of an application layer and another layer of the smartphone 1400. The memory 1402 includes a RAM and a ROM, and stores data and programs executed by the processor 1401. The storage device 1403 may include a storage medium such as a semiconductor memory and a hard disk. The external connection interface 1404 is an interface for connecting external devices such as a memory card and a universal serial bus (USB) device to the smartphone 1400.

The camera device 1406 includes an image sensor such as a charge-coupled device (CCD) and a complementary metal oxide semiconductor (CMOS), and generates a captured image. The sensor 1407 may include a set of sensors such as a measurement sensor, a gyroscope sensor, a geomagnetic sensor, and an acceleration sensor. The microphone 1408 converts a sound input to the smartphone 1400 into an audio signal. The input device 1409 includes, for example, a touch sensor, a keypad, a keyboard, a button, or a switch configured to detect a touch on the screen of the display device 1410, and receives an operation or information input from a user. The display device 1410 includes a screen such as a liquid crystal display (LCD) and an organic light emitting diode (OLED) display, and displays an output image of the smartphone 1400. The speaker 1411 converts an audio signal output from the smartphone 1400 into a sound.

The wireless communication interface 1412 supports any cellular communication scheme such as LTE and LTE-Advanced, and performs wireless communication. The wireless communication interface 1412 may generally include, for example, a BB processor 1413 and an RF circuit 1414. The BB processor 1413 may perform, for example, encoding / decoding, modulation / demodulation, and multiplexing / demultiplexing, and perform various types of signal processing for wireless communication. Meanwhile, the RF circuit 1414 may include, for example, a mixer, a filter, and an amplifier, and transmits and receives wireless signals via the antenna 1416. The wireless communication interface 1412 may be a chip module on which a BB processor 1413 and an RF circuit 1414 are integrated. As shown in FIG. 14, the wireless communication interface 1412 may include multiple BB processors 1413 and multiple RF circuits 1414. Although FIG. 14 illustrates an example in which the wireless communication interface 1412 includes a plurality of BB processors 1413 and a plurality of RF circuits 1414, the wireless communication interface 1412 may also include a single BB processor 1413 or a single RF circuit 1414.

In addition, in addition to the cellular communication scheme, the wireless communication interface 1412 may support other types of wireless communication scheme, such as a short-range wireless communication scheme, a near field communication scheme, and a wireless local area network (LAN) scheme. In this case, the wireless communication interface 1412 may include a BB processor 1413 and an RF circuit 1414 for each wireless communication scheme.

Each of the antenna switches 1415 switches a connection destination of the antenna 1416 between a plurality of circuits included in the wireless communication interface 1412 (for example, circuits for different wireless communication schemes).

Each of the antennas 1416 includes a single or multiple antenna elements, such as multiple antenna elements included in a MIMO antenna, and is used for the wireless communication interface 1412 to transmit and receive wireless signals. As shown in FIG. 14, the smartphone 1400 may include a plurality of antennas 1416. Although FIG. 14 illustrates an example in which the smart phone 1400 includes a plurality of antennas 1416, the smart phone 1400 may also include a single antenna 1416.

In addition, the smartphone 1400 may include an antenna 1416 for each wireless communication scheme. In this case, the antenna switch 1415 may be omitted from the configuration of the smartphone 1400.

The bus 1417 connects the processor 1401, the memory 1402, the storage device 1403, the external connection interface 1404, the camera device 1406, the sensor 1407, the microphone 1408, the input device 1409, the display device 1410, the speaker 1411, the wireless communication interface 1412, and the auxiliary controller 1419 to each other. The battery 1418 supplies power to each block of the smartphone 1400 shown in FIG. 14 via a feeder, and the feeder is partially shown as a dotted line in the figure. The auxiliary controller 1419 operates the minimum necessary functions of the smartphone 1400 in the sleep mode, for example.

### Second example

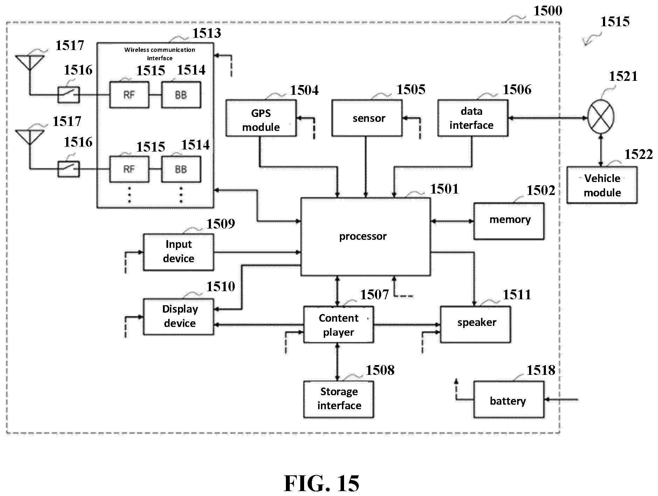

FIG. 15 is a block diagram illustrating an example of a schematic configuration of a vehicle navigation device 1500 to which the technology of the present disclosure can be applied. The vehicle navigation device 1500 includes a processor 1501, a memory 1502, a global location system (GPS) module 1504, a sensor 1505, a data interface 1506, a content player 1507, a storage medium interface 1508, an input device 1509, a display device 1510, a speaker 1511, and a wireless communication interface 1513, one or more antenna switches 1516, one or more antennas 1517, and a battery 1518. In an implementation manner, the vehicle navigation device 1500 (or the processor 1501) herein may correspond to the transmitting device or terminal-side electronic device.

The processor 1501 may be, for example, a CPU or a SoC, and controls navigation functions and other functions of the vehicle navigation device 1500. The memory 1502 includes a RAM and a ROM, and stores data and programs executed by the processor 1501.

The GPS module 1504 uses a GPS signal received from a GPS satellite to measure the position (such as latitude, longitude, and altitude) of the vehicle navigation device 1500. The sensor 1505 may include a set of sensors such as a gyroscope sensor, a geomagnetic sensor, and an air pressure sensor. The data interface 1506 is connected to, for example, an in-vehicle network 1521 via a terminal not shown, and acquires data (such as vehicle speed data) generated by the vehicle.

The content player 1507 reproduces content stored in a storage medium such as a CD and a DVD, which is inserted into the storage medium interface 1508. The input device 1509 includes, for example, a touch sensor, a button, or a switch configured to detect a touch on the screen of the display device 1510, and receives an operation or information input from a user. The display device 1510 includes a screen such as an LCD or OLED display, and displays an image of a navigation function or reproduced content. The speaker 1511 outputs the sound of the navigation function or the reproduced content.

The wireless communication interface 1513 supports any cellular communication scheme such as LTE and LTE-Advanced, and performs wireless communication. The wireless communication interface 1513 may generally include, for example, a BB processor 1514 and an RF circuit 1515. The BB processor 1514 may perform, for example, encoding / decoding, modulation / demodulation, and multiplexing / demultiplexing, and perform various types of signal processing for wireless communication. Meanwhile, the RF circuit 1515 may include, for example, a mixer, a filter, and an amplifier, and transmit and receive wireless signals via the antenna 1517. The wireless communication interface 1513 may also be a chip module on which a BB processor 1514 and an RF circuit 1515 are integrated. As shown in FIG. 15, the wireless communication interface 1513 may include a plurality of BB processors 1514 and a plurality of RF circuits 1515. Although FIG. 15 illustrates an example in which the wireless communication interface 1513 includes a plurality of BB processors 1514 and a plurality of RF circuits 1515, the wireless communication interface 1513 may also include a single BB processor 1514 or a single RF circuit 1515.

In addition, in addition to the cellular communication scheme, the wireless communication interface 1513 may support other types of wireless communication scheme, such as a short-range wireless communication scheme, a near field communication scheme, and a wireless LAN scheme. In this case, the wireless communication interface 1513 may include a BB processor 1514 and an RF circuit 1515 for each wireless communication scheme.

Each of the antenna switches 1516 switches the connection destination of the antenna 1517 between a plurality of circuits included in the wireless communication interface 1513, such as circuits for different wireless communication schemes.

Each of the antennas 1517 includes a single or multiple antenna element, such as multiple antenna elements included in a MIMO antenna, and is used for the wireless communication interface 1513 to transmit and receive wireless signals. As shown in FIG. 15, the vehicle navigation device 1500 may include a plurality of antennas 1517. Although FIG. 15 illustrates an example in which the vehicle navigation device 1500 includes a plurality of antennas 1517, the vehicle navigation device 1500 may also include a single antenna 1517.

In addition, the vehicle navigation device 1500 may include an antenna 1517 for each wireless communication scheme. In this case, the antenna switch 1516 may be omitted from the configuration of the vehicle navigation device 1500.

The battery 1518 supplies power to each block of the vehicle navigation device 1500 shown in FIG. 15 via a feeder, and the feeder is partially shown as a dotted line in the figure. The battery 1518 accumulates power provided from the vehicle.

The technology of the present disclosure may also be implemented as a vehicle on-board system (or vehicle) 1520 including one or more of a vehicle navigation device 1500, an in-vehicle network 1521, and a vehicle module 1522. The vehicle module 1522 generates vehicle data such as vehicle speed, engine speed, and failure information, and outputs the generated data to the in-vehicle network 1521.

The exemplary embodiments of the present disclosure have been described above with reference to the drawings, but the present disclosure is of course not limited to the above examples. Those skilled in the art may find various alternations and modifications within the scope of the appended claims, and it should be understood that they will naturally fall in the technical scope of the present disclosure.

It should be understood that the machine-executable instructions in the machine-readable storage medium or program product according to the embodiments of the present disclosure may be configured to perform operations corresponding to the above-mentioned device and method embodiments. When referring to the above device and method embodiments, the embodiments of the machine-readable storage medium or program product are clear to those skilled in the art, and therefore will not be described repeatedly. Machine-readable storage medium and program products for carrying or including the above-mentioned machine-executable instructions also fall within the scope of the present disclosure. Such a storage medium may include, but is not limited to, a floppy disk, an optical disk, a magneto-optical disk, a memory card, a memory stick, and the like.

**In** addition, it should be understood that the processes and devices described above may also be implemented by software and/or firmware. **In** the case of implementation by software and/or firmware, corresponding programs constituting the corresponding software are stored in the storage medium of the related device, and the programs, when executed, can perform various functions.

For example, a plurality of functions included in one unit in the above embodiment can be realized by separate devices. Alternatively, a plurality of functions implemented by multiple units in the above embodiments may be respectively realized by separate devices. In addition, one of the above functions can be realized by multiple units, and such a configuration is also included in the technical scope of this disclosure.

In this specification, the steps described in the flowchart include not only the processes that are executed in time series in the stated order, but also the processes that are executed in parallel or solely instead of necessarily in time series. In addition, even in the step of processing in time series, needless to say, the order can be appropriately changed.

In addition, the method and system of the present disclosure can be implemented in various ways. For example, the methods and systems of the present disclosure may be implemented by software, hardware, firmware, or any combination thereof. The order of the steps of the method described above is only illustrative, and the steps of the method of the present disclosure are not limited to the order specifically described above unless otherwise specified. Furthermore, in some embodiments, the present disclosure can also be embodied as a program recorded in a recording medium, including machine-readable instructions for implementing the method according to the present disclosure. Therefore, the present disclosure also covers a recording medium storing a program for implementing the method according to the present disclosure. Such storage media may include, but not limited to, floppy disks, optical disks, magneto-optical disks, memory cards, memory sticks, and the like.

Those skilled in the art should realize that the boundaries between the above operations are merely illustrative. Multiple operations can be combined into a single operation, the single operation can be distributed among additional operations, and the operations can be performed at least partially overlapping in time. Moreover, alternative embodiments may include multiple instances of specific operations, and the order of operations may be changed in other various embodiments. However, other modifications, variations and substitutions are also possible. Therefore, the specification and drawings should be regarded as illustrative rather than restrictive.

**In** addition, the embodiments of the present disclosure may also include the following exemplary embodiments (EE).

EE1. A control-side electronic device in a wireless communication system, wherein the control-side electronic device can perform multi-stream data transmission with a terminal-side electronic device in the wireless communication system, and the control-side electronic device comprises a processing circuit which is configured to:
determine an amount of scheduling identification information configured for the terminal-side electronic device, based on data transmission characteristics of data streams included in the multi-stream data transmission;
in response to it is determined to configure multiple pieces of scheduling identification information, associate the multiple pieces of scheduling identification information with multiple data streams included in the multi-stream data transmission; and
for a specific data stream in the multi-stream data transmission, combine scheduling identification information associated with the specific data stream and control information for scheduling the specific data stream for transmission of the specific data stream.

EE2. The control-side electronic device of EE1, wherein the data streams included in the multi-stream data transmission comprise data streams in at least one of uplink data transmission and downlink data transmission, and wherein, the data transmission characteristics comprise data periodicities and/or data size characteristics of data streams.

EE 3. The control-side electronic device of EE1 or 2, wherein the data streams include an I stream and/or a P stream, and the data transmission characteristics comprise data periodicities and/or data size characteristics of the I streams and/or the P streams included in the data streams.

EE 4. The control-side electronic device of any one of EEs 1 to 3, wherein the data streams included in the multi-stream data transmission comprise data streams in one of uplink data transmission and downlink data transmission, and
wherein, the amount of scheduling identification information is determined based on the number of data streams having specific data transmission characteristics in one of the uplink data transmission and the downlink data transmission, and wherein the specific data transmission characteristics comprise non-fixed data size and/or periodicity or quasi-periodicity.

EE 5. The control-side electronic device of any one of EEs 1 to 3, wherein the data streams included in the multi-stream data transmission comprise data streams in both of uplink data transmission and downlink data transmission, and
wherein, the amount of scheduling identification information is determined based on a combination of the number of data streams having specific data transmission characteristics in the uplink data transmission and the number of data streams having specific data transmission characteristics in the downlink data transmission, and wherein the specific data transmission characteristics comprise non-fixed data size and/or periodicity or quasi-periodicity.

EE 6. The control-side electronic device of EE5, wherein the amount of the scheduling identification information corresponds to a maximum value among the number of data streams of non-fixed data size included in the uplink data transmission and the number of data streams of non-fixed data size included in the downlink data transmission, or
the amount of the scheduling identification information corresponds to a maximum value among the number of periodic or quasi-periodic data streams included in the uplink data transmission and the number of periodic or quasi-periodic data streams included in the downlink data transmission.

EE 7. The control-side electronic device of any one of EEs 1 to 6, wherein the processing circuit is further configured to:
associate at least two pieces of scheduling identification information with data streams included in the multi-stream data transmission according to arrangement order of the scheduling identification information, and/or
set association pairs between the data streams and the scheduling identification information when the scheduling identification information is configured.

EE 8. The control-side electronic device of any one of EEs 1 to 7, wherein the processing circuit is further configured to:
associate scheduling identification information with scheduling configuration for data streams, and
for a specific data stream in the multi-stream data transmission, associate the scheduling identification information associated with the scheduling configuration for the specific data stream and control information about the scheduling configuration for the specific data stream.

EE 9. The control-side electronic device of EE8, wherein the scheduling configurations for data streams may comprise semi-persistent scheduling (SPS) and/or configure grant (CG), and
wherein the control-side electronic device sets corresponding control information for the semi-persistent scheduling (SPS) and/or configure grant (CG) for the data streams respectively.

EE 10. The control-side electronic device of any one of EEs 1 to 9, wherein the processing circuit is further configured to:
for a data stream in the multi-flow data transmission that is not associated with the scheduling identification information, configure resources for the data stream through resource configuration signaling (RRC) for transmission.

EE 11. The control-side electronic device of EE10, wherein the data stream not associated with the scheduling identification information includes a periodic downlink data stream of fixed size, and for the scheduling configuration (SPS) of the periodic downlink data stream of fixed size, resources are configured through resource configuration signaling (RRC), for transmission.

EE 12. The control-side electronic device of any one of EEs 1 to 9, wherein the processing circuit is further configured to:
transmit the control information and the combined scheduling identification information through radio resource control signaling when multi-stream data transmission is started; or
adjust the scheduling configuration for data streams based on a data transmission condition during data transmission, wherein the data transmission condition includes at least one of a packet size, a jitter, and a data scheduling condition of a data stream.

EE 13. The control-side electronic device of any one of EEs 1 to 12, wherein the processing circuit is further configured to:
preset activation information about a specific scheduling configuration for a data stream, so that a state of the scheduling configuration is automatically switched when an activation condition indicated by the activation information expires.

EE 14. The control-side electronic device of EE13, wherein the activation information includes an activation time, or an number of activation cycles, or an index value indicating the activation time or the number of activation cycles, for the specific scheduling configuration, and/or wherein the activation information is indicated by a bit newly added in the control information or by an existing bit in the control information.

EE 15. The control-side electronic device of any one of EEs 1 to 14, wherein the processing circuit is further configured to:
configure a search space in which the terminal-side device performs detection to include all configured scheduling identification information.

EE 16. A terminal-side electronic device in a wireless communication system, wherein the terminal-side electronic device can perform multi-stream data transmission with a control-side electronic device in the wireless communication system, and the terminal-side electronic device comprises a processing circuit which is configured to:
acquire combination information of specific scheduling identification information and specific control information, wherein the specific scheduling identification information is selected from multiple pieces of scheduling identification information associated with data streams in the multi-stream data transmission that configured based on data transmission characteristics of the data streams;
determine a specific data stream associated with the specific scheduling identification information based on the specific scheduling identification information, and
perform data transmission of the specific data stream based on the specific control information.

EE 17. The terminal-side electronic device of EE16, wherein the combination information is represented as specific control information scrambled by the specific scheduling identification information, and the processing circuit is further configured to:
attempt to descramble the specific control information by using the multiple pieces of scheduling identification information to acquire the specific scheduling identification information, and
perform decoding based on the specific scheduling identification information to obtain the specific control information.

EE 18. The terminal-side electronic device of EE16 or 17, wherein the processing circuit is further configured to:
determine a scheduling configuration for a specific data stream associated with the specific scheduling identification information based on the specific control information, and
perform data transmission of the specific data stream based on the scheduling configuration.

EE 19. The terminal-side electronic device of any one of EEs 16 to 18, wherein the processing circuit is further configured to:
acquire activation information about scheduling configuration from the specific control information,
switch a scheduling configuration state automatically when an activation condition indicated by the activation information expires, and
in response to automatic switching to a specific transmission configuration, perform data transmission of a specific data stream according to the switched specific transmission configuration, and descrambling of control information is no longer performed.

EE 20. The terminal-side electronic device of EE19, wherein, when the activation condition indicated by the activation information expires, data transmission terminates when the scheduling configuration automatically switches to a deactivated state.

EE 21. The terminal-side electronic device of any one of EEs 16 to 20, wherein the processing circuit is further configured to:
provide information including at least the data transmission characteristics to the control-side electronic device.

EE 22. The terminal-side electronic device of any one of EEs 16 to 21, wherein the processing circuit is further configured to:
acquire a condition about data transmission between the terminal-side electronic device and the control-side electronic device, wherein the data transmission condition includes at least one of a data packet size, a jitter, and a data scheduling condition of a data stream, and
provide the acquired data transmission condition to the control-side electronic device, so that the control-side electronic device is able to adjust the scheduling configuration based on the data transmission condition.

EE 23. A method for a control-side electronic device in a wireless communication system, wherein the control-side electronic device can perform multi-stream data transmission with a terminal-side electronic device in the wireless communication system, and the method comprises:
determining an amount of scheduling identification information configured for the terminal-side electronic device, based on data transmission characteristics of data streams included in the multi-stream data transmission;
in response to it is determined to configure multiple pieces of scheduling identification information, associating the multiple pieces of scheduling identification information with multiple data streams included in the multi-stream data transmission; and
for a specific data stream in the multi-stream data transmission, combining scheduling identification information associated with the specific data stream and control information for scheduling the specific data stream for transmission of the specific data stream.

EE 24. A method for a terminal-side electronic device in a wireless communication system, wherein the terminal-side electronic device performs multi-stream data transmission with a control-side electronic device in the wireless communication system, and the method comprises:
acquiring combination information of specific scheduling identification information and specific control information, wherein the specific scheduling identification information is selected from multiple pieces of scheduling identification information associated with data streams in the multi-stream data transmission that configured based on data transmission characteristics of the data streams;
determining a specific data stream associated with the specific scheduling identification information based on the specific scheduling identification information, and
performing data transmission of the specific data stream based on the specific control information.

EE 25. A wireless communication device, comprising:
at least one processor; and
at least one storage device storing instructions thereon, wherein the instructions, when executed by the at least one processor, cause the at least one processor to implement the method of EE23 or 24.

EE 26. A storage medium storing instructions which, when executed by a processor, cause implementation of the method of EE23 or 24.

EE 27. A computer program product comprising instructions which, when executed by a processor, cause implementation of the method of EE23 or 24.

EE 28. A wireless communication apparatus comprising means for implementing the method of EE23 or 24.

EE 29. A computer program comprising instructions which, when executed by an electronic device, cause implementation of the method of EE23 or 24.

Although the present disclosure and its advantages have been described in detail, it should be understood that various changes, substitutions and alterations can be made hereto without departing from the spirit and scope of the present disclosure as defined by the appended claims. Furthermore, the terms "including", "comprising", or any other variation thereof, of the embodiments of the present disclosure are intended to encompass non-exclusive inclusion, such that a process, method, article, or device that includes a series of elements includes not only those elements, but also includes other elements not explicitly listed, or those inherent in the process, method, article, or equipment. Without more restrictions, the elements defined by the sentence "including a ..." do not exclude the existence of other identical elements in the process, method, article, or equipment including the elements.

Although some specific embodiments of the present disclosure have been described in detail, those skilled in the art should understand that the above-described embodiments are merely illustrative and do not limit the scope of the present disclosure. Those skilled in the art should understand that the above-described embodiments may be combined, modified, or replaced without departing from the scope and essence of the present disclosure. The scope of the present disclosure is defined by the appended claims.

## Claims

1. A control-side electronic device in a wireless communication system, wherein the control-side electronic device is capable of performing multi-stream data transmission with a terminal-side electronic device in the wireless communication system, and the control-side electronic device comprises a processing circuit which is configured to:
determine an amount of scheduling identification information configured for the terminal-side electronic device, based on data transmission characteristics of data streams included in the multi-stream data transmission;
in response to it is determined to configure multiple pieces of scheduling identification information, associate the multiple pieces of scheduling identification information with multiple data streams included in the multi-stream data transmission; and
for a specific data stream in the multi-stream data transmission, combine scheduling identification information associated with the specific data stream and control information for scheduling the specific data stream for transmission of the specific data stream.

2. The control-side electronic device of claim 1, wherein the data streams included in the multi-stream data transmission comprise data streams in at least one of uplink data transmission and downlink data transmission, and
wherein, the data transmission characteristics comprise data periodicities and/or data size characteristics of the data streams.

3. The control-side electronic device of claim 1 or 2, wherein the data streams include an I stream and/or a P stream, and the data transmission characteristics comprise data periodicities and/or data size characteristics of the I stream and/or the P stream included in the data streams.

4. The control-side electronic device of any one of claims 1 to 3, wherein the data streams included in the multi-stream data transmission comprise data streams in one of uplink data transmission and downlink data transmission, and
wherein, the amount of scheduling identification information is determined based on the number of data streams having specific data transmission characteristics in one of the uplink data transmission and the downlink data transmission, and wherein the specific data transmission characteristics comprise non-fixed data size and/or periodicity or quasi-periodicity.

5. The control-side electronic device of any one of claims 1 to 3, wherein the data streams included in the multi-stream data transmission comprise data streams in both of uplink data transmission and downlink data transmission, and
wherein, the amount of scheduling identification information is determined based on a combination of the number of data streams having specific data transmission characteristics in the uplink data transmission and the number of data streams having specific data transmission characteristics in the downlink data transmission, and wherein the specific data transmission characteristics comprise non-fixed data size and/or periodicity or quasi-periodicity.

6. The control-side electronic device of claim 5, wherein the amount of the scheduling identification information corresponds to a maximum value among the number of data streams of non-fixed data size included in the uplink data transmission and the number of data streams of non-fixed data size included in the downlink data transmission, or
the amount of the scheduling identification information corresponds to a maximum value among the number of periodic or quasi-periodic data streams included in the uplink data transmission and the number of periodic or quasi-periodic data streams included in the downlink data transmission.

7. The control-side electronic device of any one of claims 1 to 6, wherein the processing circuit is further configured to:
associate at least two pieces of scheduling identification information with data streams included in the multi-stream data transmission according to arrangement order of the scheduling identification information, and/or
set association pairs between the data streams and the scheduling identification information when the scheduling identification information is configured.

8. The control-side electronic device of any one of claims 1 to 7, wherein the processing circuit is further configured to:
associate scheduling identification information with scheduling configurations for data streams, and
for a specific data stream in the multi-stream data transmission, associate the scheduling identification information associated with the scheduling configuration for the specific data stream and control information about the scheduling configuration for the specific data stream.

9. The control-side electronic device of claim 8, wherein the scheduling configurations for data streams comprise semi-persistent scheduling (SPS) and/or configure grant (CG), and
wherein the control-side electronic device sets corresponding control information for the semi-persistent scheduling (SPS) and/or configure grant (CG) for the data streams respectively.

10. The control-side electronic device of any one of claims 1 to 9, wherein the processing circuit is further configured to:
for a data stream in the multi-flow data transmission that is not associated with the scheduling identification information, configure resources for the data stream through resource configuration signaling (RRC) for transmission.

11. The control-side electronic device of claim 10, wherein the data stream not associated with the scheduling identification information includes a periodic downlink data stream of fixed size, and for the scheduling configuration (SPS) of the periodic downlink data stream of fixed size, resources are configured through resource configuration signaling (RRC), for transmission.

12. The control-side electronic device of any one of claims 1 to 9, wherein the processing circuit is further configured to:
transmit the control information and the combined scheduling identification information through radio resource control signaling when multi-stream data transmission is started; or
adjust the scheduling configuration for data streams based on a data transmission condition during data transmission, wherein the data transmission condition includes at least one of a packet size, a jitter, and a data scheduling condition of a data stream.

13. The control-side electronic device of any one of claims 1 to 12, wherein the processing circuit is further configured to:
preset activation information about a specific scheduling configuration for a data stream, so that a state of the scheduling configuration is automatically switched when an activation condition indicated by the activation information expires.

14. The control-side electronic device of claim 13, wherein the activation information includes an activation time, or an number of activation cycles, or an index value indicating the activation time or the number of activation cycles, for the specific scheduling configuration, and/or wherein the activation information is indicated by a bit newly added in the control information or by an existing bit in the control information.

15. The control-side electronic device of any one of claims 1 to 14, wherein the processing circuit is further configured to:
configure a search space, in which the terminal-side device performs detection, to include all configured scheduling identification information.

16. A terminal-side electronic device in a wireless communication system, wherein the terminal-side electronic device is capable of performing multi-stream data transmission with a control-side electronic device in the wireless communication system, and the terminal-side electronic device comprises a processing circuit which is configured to:
acquire combination information of specific scheduling identification information and specific control information, wherein the specific scheduling identification information is selected from multiple pieces of scheduling identification information associated with data streams in the multi-stream data transmission that configured based on data transmission characteristics of the data streams;
determine a specific data stream associated with the specific scheduling identification information based on the specific scheduling identification information, and
perform data transmission of the specific data stream based on the specific control information.

17. The terminal-side electronic device of claim 16, wherein the combination information is represented as specific control information scrambled by the specific scheduling identification information, and the processing circuit is further configured to:
attempt to descramble the specific control information by using multiple pieces of scheduling identification information to acquire the specific scheduling identification information, and
perform decoding based on the specific scheduling identification information to obtain the specific control information.

18. The terminal-side electronic device of claim 16 or 17, wherein the processing circuit is further configured to:
determine a scheduling configuration for a specific data stream associated with the specific scheduling identification information based on the specific control information, and
perform data transmission of the specific data stream based on the scheduling configuration.

19. The terminal-side electronic device of any one of claims 16 to 18, wherein the processing circuit is further configured to:
acquire activation information about scheduling configuration from the specific control information,
switch a scheduling configuration state automatically when an activation condition indicated by the activation information expires, and
in response to automatic switching to a specific transmission configuration, perform data transmission of a specific data stream according to the switched specific transmission configuration, and descrambling of control information is no longer performed.

20. The terminal-side electronic device of claim 19, wherein, when the activation condition indicated by the activation information expires, data transmission terminates when the scheduling configuration automatically switches to a deactivated state.

21. The terminal-side electronic device of any one of claims 16 to 20, wherein the processing circuit is further configured to:
provide information including at least the data transmission characteristics to the control-side electronic device.

22. The terminal-side electronic device of any one of claims 16 to 21, wherein the processing circuit is further configured to:
acquire a condition about data transmission between the terminal-side electronic device and the control-side electronic device, wherein the data transmission condition includes at least one of a data packet size, a jitter, and a data scheduling condition of a data stream, and
provide the acquired data transmission condition to the control-side electronic device, so that the control-side electronic device is able to adjust the scheduling configuration based on the data transmission condition.

23. A method for a control-side electronic device in a wireless communication system, wherein the control-side electronic device is capable of performing multi-stream data transmission with a terminal-side electronic device in the wireless communication system, and the method comprises:
determining an amount of scheduling identification information configured for the terminal-side electronic device, based on data transmission characteristics of data streams included in the multi-stream data transmission;
in response to it is determined to configure multiple pieces of scheduling identification information, associating the multiple pieces of scheduling identification information with multiple data streams included in the multi-stream data transmission; and
for a specific data stream in the multi-stream data transmission, combining scheduling identification information associated with the specific data stream and control information for scheduling the specific data stream for transmission of the specific data stream.

24. A method for a terminal-side electronic device in a wireless communication system, wherein the terminal-side electronic device performs multi-stream data transmission with a control-side electronic device in the wireless communication system, and the method comprises:
acquiring combination information of specific scheduling identification information and specific control information, wherein the specific scheduling identification information is selected from multiple pieces of scheduling identification information associated with data streams in the multi-stream data transmission that configured based on data transmission characteristics of the data streams;
determining a specific data stream associated with the specific scheduling identification information based on the specific scheduling identification information, and
performing data transmission of the specific data stream based on the specific control information.

25. A wireless communication device, comprising:
at least one processor; and
at least one storage device storing instructions thereon, wherein the instructions, when executed by the at least one processor, cause the at least one processor to implement the method of claim 23 or 24.

26. A storage medium storing instructions which, when executed by a processor, cause implementation of the method of claim 23 or 24.

27. A computer program product comprising instructions which, when executed by a processor, cause implementation of the method of claim 23 or 24.

28. A wireless communication apparatus comprising means for implementing the method of claim 23 or 24.

29. A computer program comprising instructions which, when executed by an electronic device, cause implementation of the method of claim 23 or 24.
